# EUROPEAN PATENT APPLICATION

(11) **EP 4 321 985 A1**
(43) Date of publication of application: **14.02.2024**
(21) Application number: 22849697.2
(22) Date of filing: 30.05.2022
(51) Int. Cl.: G06F 3/14, G06F 3/0483

(54) **ELECTRONIC APPARATUS HAVING EXPANDABLE DISPLAY, AND SCREEN DISPLAY METHOD THEREFOR**

(30) Priority: 30.07.2021 KR 20210100489
(71) Applicant: Samsung Electronics Co., Ltd., Suwon-si, Gyeonggi-do 16677 (KR)
(72) Inventor: YU, Hyemi, Suwon-si Gyeonggi-do 16677 (KR); KIM, Daewon, Suwon-si Gyeonggi-do 16677 (KR); YOO, Jiwon, Suwon-si Gyeonggi-do 16677 (KR)
(74) Representative: Appleyard Lees IP LLP
(86) International application number: PCT/KR2022/007659
(87) International publication number: WO 2023/008718

(57) **Abstract**

An electronic device is provided. The electronic device includes a first display, a second display, and a processor configured to provide a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured; configure the second screen according to the mode set via the UI, and display, based on whether the second display is activated, one screen among the first screen and the second screen configured according to the mode.

## Description

### BACKGROUND

### 1. Field

The disclosure relates to an electronic device with an expandable display, and a method of displaying a screen of the electronic device.

### 2. Description of Related Art

With the development of a display technology, various types of expandable displays, such as a flexible display, are being developed. For example, the flexible display may be implemented using a plastic film to provide flexibility. The flexible display is thin, light and strong. In addition, the flexible display can be curved or bent, and thus can be manufactured in various shapes.

### SUMMARY

In accordance with an aspect of the disclosure, an electronic device includes: a first display; a second display; and a processor configured to: provide a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured; configure the second screen according to the mode set via the UI; and display, based on whether the second display is activated, one screen among the first screen and the second screen configured according to the mode.

The processor may be further configured to: independently configure the second contents of the second screen and the first contents, based on the mode being set as the first mode; and synchronously configure the first contents and the second contents based on the mode being set as the second mode.

The first screen may include first pages, and the processor may be further configured to generate, based on a number of first pages of the first screen, a second page of the second screen on which the second contents are displayed.

The processor may be further configured to: configure the second page such that one first page is arranged in a first area of the second page, and an empty page is arranged in a second area of the second page, based on the number of first pages being one; configure the second page such that the first pages are displayed in pairs on the second page, based on the number of first pages being an even number greater than one; and configure the second page such that a last first page of the first pages and a penultimate first page of the first pages are displayed together, based on the number of first pages being an odd number greater than one.

The processor may be further configured to identify at least one of a number of pages to move on the second screen and an editing area of the second page based on a user input with respect to the second screen.

The processor may be further configured to: move the second screen in units of the first pages based on the user input being a first type of user input; move from a first second page to a last second page of the second screen based on the user input being a second type of user input; identify a first area of the second page as editable based on the user input being a third type of user input; and identify a second area of the second page as editable based on the user input being a fourth type of user input.

The processor may be further configured to: independently configure the second contents of the second screen and the first contents, based on the mode being set as the first mode; and synchronously configure the first contents and the second contents such that a number of first contents in a first hot-seat area of the first screen is equal to a number of second contents in a second hot-seat area of the second screen, based on the mode being set as the second mode.

The processor may be further configured to restore a previous configuration of the second screen, independently of the first contents, based on the mode being switched from the second mode to the first mode.

The processor may be further configured to: receive a user setting for indicating whether to restore at least one page of the previous configuration or content of the previous configuration; restore the at least one page of the previous configuration based on the user setting indicating to restore the at least one page of the previous configuration; and display the at least one page of the previous configuration.

The processor may be further configured to: restore the content of the previous configuration based on the user setting indicating to restore the content of the previous configuration; and display the content of the previous configuration.

The processor may be further configured to: receive, from an external device in which information related to the second contents included in the second screen is stored for each of a plurality of devices, a user setting indicating a target device, from among the plurality of devices, to restore the second screen to; and restore the second screen to the target device.

The processor may be further configured to store information related to the second contents configured on the second screen independently of the first contents previously configured according to the first mode, based on the mode being set as the second mode.

The processor may be further configured to: control the first display to display the first contents on the first screen, based on the second display being inactive; and control the second display to display the second contents configured according to the mode, based on the second display being activated.

The first display and the second display may have different aspect ratios, the electronic device may be configured to be manipulated between a first configuration corresponding to a size of the first display and a second configuration corresponding to a second size larger than the first display, and the processor may be further configured to activate the second display based on the electronic device being in the second configuration.

In accordance with an aspect of the disclosure, a method of controlling an electronic device including a first display and a second display, includes: providing a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured; configuring the second screen according to the mode set via the UI; and displaying, based on whether the second display is activated, one screen among the first screen and the second screen configured according to the mode.

The configuring the second screen may include: independently configuring the second contents of the second screen and the first contents, based on the mode being set as the first mode; and synchronously configuring the second contents and the first contents, based on the mode being set as the second mode.

The configuring the second contents on the at least a portion of the second screen may include: independently configuring the second contents of the second screen and the first contents, based on the mode being set as the first mode; and synchronously configuring the first contents and the second contents such that a number of first contents in a first hot-seat area of the first screen is equal to a number of second contents in a second hot-seat area of the second screen, based on the mode being set as the second mode.

The method may further include restoring a previous configuration of the second screen, independently of the first contents, based on the mode being switched from the second mode to the first mode.

The method may further include storing information related to the second contents configured on the second screen independently of the first contents previously configured according to the first mode, based on the mode being set as the second mode.

In accordance with an aspect of the disclosure, a non-transitory computer-readable medium storing computer-readable instructions that, when executed by a processor of an electronic device including a first display and a second display, cause the processor to perform a method of including: providing a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured; configuring the second screen according to the mode set via the UI; and displaying, based on whether the second display is activated, one screen among the first screen and the second screen configured according to the mode.

In accordance with an aspect of the disclosure, an electronic device includes: a first display; a second display; and a processor configured to: independently configure, based on a mode being set to a first mode, first content of a first screen corresponding to the first display and second content of a second screen corresponding to the second display; synchronously configure, based on the mode being set to a second mode, the first content of the first screen with the second content of the second screen; and display, based on whether the second display is activated, one screen among the first screen and the second screen configured according to the mode.

The electronic device may further include a hinge configured to couple the first display to the second display.

The electronic device may further include a sensor configured to generate a sensor signal, and the processor may be further configured to identify a folding configuration of the electronic device based on the sensor signal.

The processor may be further configured to activate the second display based on the processor identifying the folding configuration as an unfolded configuration.

The processor may be further configured to, based on the mode being set to the second mode: store a first screen configuration set via the first display while the folding configuration is a folded configuration; control the second display based on the first screen configuration based on the folding configuration changing from the folded configuration to the unfolded configuration; modify the first screen configuration to a second screen configuration via the second display; and control the first display based on the second screen configuration based on the folding configuration changing from the unfolded configuration to the folded configuration.

In accordance with an aspect of the disclosure, a method of controlling an electronic device including a first display and a second display, includes: independently configuring, based on a mode being set to a first mode, first content of a first screen corresponding to the first display and second content of a second screen corresponding to the second display; synchronously configuring, based on the mode being set to a second mode, the first content of the first screen with the second content of the second screen; and displaying, based on whether the second display is activated, one screen among the first screen and the second screen configured according to the mode.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to embodiments;
FIG. 2 is a diagram illustrating an unfolded status of an electronic device according to embodiments;
FIG. 3 is a diagram illustrating a folded status of an electronic device according to embodiments;
FIG. 4A is a perspective view illustrating an example of a fully unfolded status of an electronic device according to embodiments;
FIG. 4B is a perspective view illustrating an example of a partially unfolded intermediate status of an electronic device according to embodiments
FIG. 5 is a block diagram illustrating an electronic device with an expandable display according to an embodiment;
FIGS. 6A and 6B are diagrams respectively illustrating a first screen of a first display and a second screen of a second display before and after synchronization is performed according to a screen configuration mode of an electronic device, according to embodiments;
FIG. 7 is a diagram illustrating a situation in which synchronization is performed based on a first screen of a first display in an electronic device according to an embodiment;
FIG. 8 is a diagram illustrating a first screen of a first display and a second screen of a second display when a screen configuration mode of an electronic device is switched from a second mode to a first mode, according to an embodiment;
FIG. 9 is a diagram illustrating a method of setting a screen configuration mode of an electronic device according to an embodiment;
FIG. 10 is a diagram illustrating a home screen and an app screen switched on each of a first display and a second display of an electronic device according to an embodiment;
FIG. 11 is a diagram illustrating a method of configuring pages of a first screen and a second screen when a screen configuration mode of an electronic device is set to a second mode, according to an embodiment;
FIG. 12 is a diagram illustrating a home screen and an app screen when a screen configuration mode of an electronic device is switched in an order of a first mode, a second mode, and the first mode, according to an embodiment;
FIGS. 13A, 13B and 13C are diagrams illustrating page configurations of a second screen determined according to a number of pages displayed on a first screen when an electronic device is synchronized, according to an embodiment;
FIGS. 14A and 14B are diagrams illustrating a method of adjusting a movement unit of a second screen for each type of user input occurring on the second screen of an electronic device according to embodiments;
FIGS. 15A and 15B are diagrams illustrating a method of adjusting an editing area of a second page for each type of user input occurring on a second screen of an electronic device according to embodiments;
FIGS. 16A and 16B are diagrams illustrating a method of setting a home screen displayed on a first screen and a second screen of an electronic device according to an embodiment;
FIGS. 17A and 17B are diagrams illustrating a method of setting grid options of a home screen and an app screen on each of a first screen and a second screen of an electronic device according to an embodiment;
FIGS. 18A and 18B are diagrams illustrating a situation in which multiple hot-seat items are displayed in hot-seat areas of a first screen and a second screen of an electronic device according to embodiments;
FIGS. 19A and 19B are diagrams illustrating a method of providing a guide phrase on a home screen and an app screen of a second screen when a screen configuration mode is set to a second mode according to embodiments;
FIG. 20 is a diagram illustrating a method of editing a home screen displayed on a second screen of an electronic device according to an embodiment;
FIG. 21 is a diagram illustrating a method of guiding switching to a second mode via a home screen displayed on a first screen of an electronic device in a situation in which a screen configuration mode is set to a first mode, according to an embodiment;
FIG. 22 is a diagram illustrating a process in which switching to a second mode is guided when an operation of expanding a second display is repeated in an electronic device according to an embodiment;
FIG. 23 is a diagram illustrating a situation in which synchronization is performed based on a second screen of a second display in an electronic device according to an embodiment;
FIG. 24 is a diagram illustrating a method of setting a screen configuration of a second screen that is restored when a screen configuration mode of an electronic device is switched from a second mode to a first mode, according to an embodiment;
FIG. 25 is a diagram illustrating a method of setting a screen configuration of a second screen that is restored when a screen configuration mode of an electronic device is switched from a second mode to a first mode, according to another embodiment;
FIGS. 26A and 26B are diagrams illustrating a method of setting a screen configuration of a second screen that is restored when a screen configuration mode of an electronic device is switched from a second mode to a first mode, according to another embodiment;
FIG. 27 is a flowchart illustrating a method of displaying a screen of an electronic device with an expandable display according to an embodiment; and
FIG. 28 is a flowchart illustrating a method of displaying a screen of an electronic device with an expandable display according to another embodiment.

### DETAILED DESCRIPTION

Hereinafter, embodiments will be described in greater detail with reference to the accompanying drawings. Like reference numerals refer to like elements and a repeated description related thereto will be omitted.

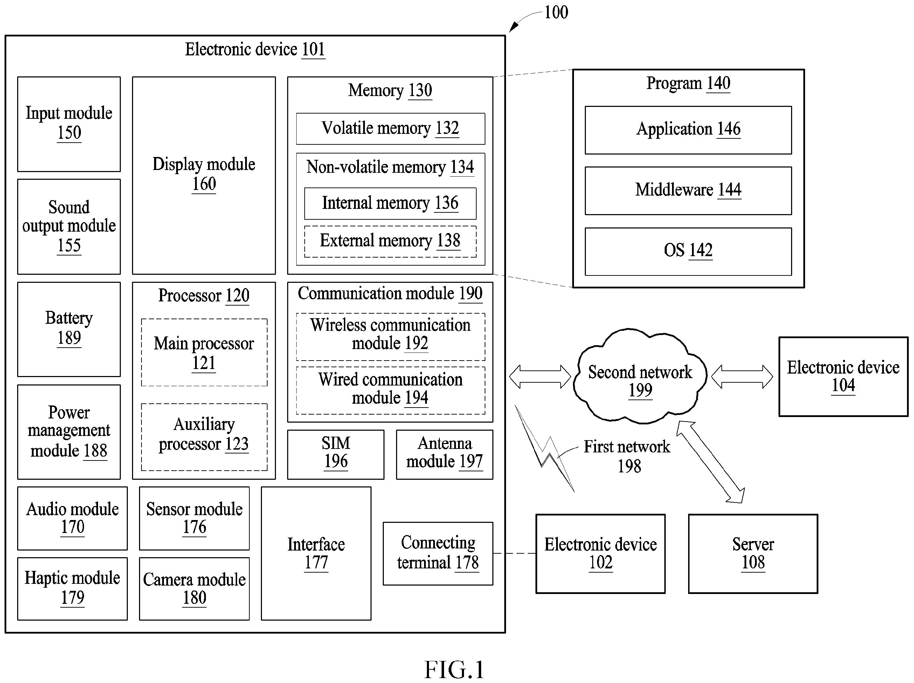

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include any one or any combination of a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as part of the main processor 121.

The auxiliary processor 123 may control, for example, at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The application 146 may include, for example, a home application, dialer application, SMS/MMS application, instant message (IM) application, browser application, camera application, alarm application, contact application, voice recognition application, email application, calendar application, media player application, album application, watch application, health application (e.g., measurement of biometric information such as an amount of exercise or blood sugar), or environmental information application (e.g., measurement of barometric pressure, humidity, or temperature information). According to an embodiment, the application 146 may further include an information exchange application capable of supporting information exchange between the electronic device 101 and an external electronic device. The information exchange application may include, for example, a notification relay application adapted to transfer specified information (e.g., call, message, or alarm) to the external electronic device, or a device management application adapted to manage the external electronic device.

For example, the notification relay application may transfer, to the external electronic device, notification information corresponding to a specified event (e.g., reception of a mail) occurring in another application (e.g., email application) of the electronic device 101. Additionally or alternatively, the notification relay application may receive the notification information from the external electronic device, and provide the notification information to a user of the electronic device 101.

The device management application may control, for example, a power supply (e.g., turn-on or turn-off) or a function (e.g., brightness, resolution, or focus) of the external electronic device that communicates with the electronic device 101 or some components of the external electronic device (e.g., a display module or a camera module of the external electronic device). The device management application may additionally or alternatively support installation, deletion, or update of an application running on the external electronic device.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as part of the speaker.

The display module 160 may visually provide information to the outside (e.g., a user) of the electronic device 101 (e.g., a user). The display module 160 may include, for example, a control circuit for controlling a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or a fingerprint sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include a slit antenna, and/or an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as part of the antenna module 197.

According to embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101.

According to an embodiment, all or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

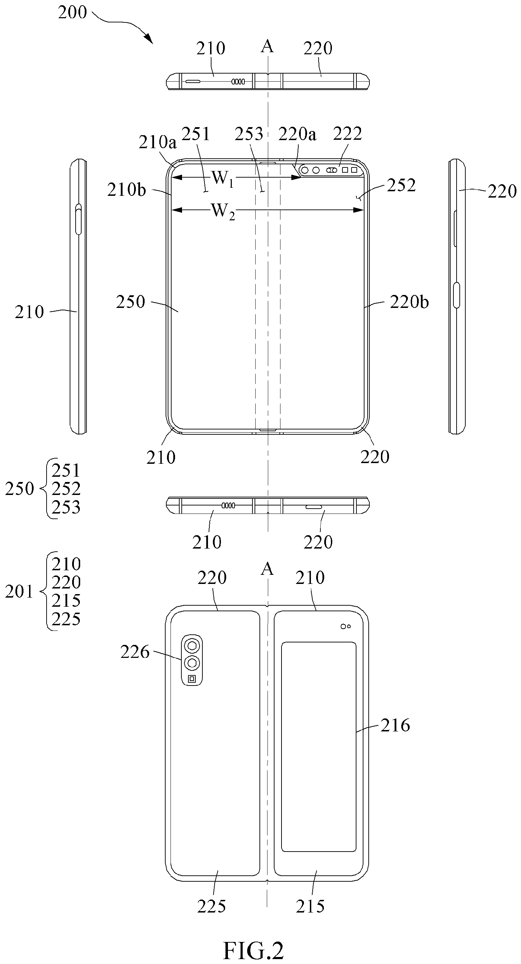

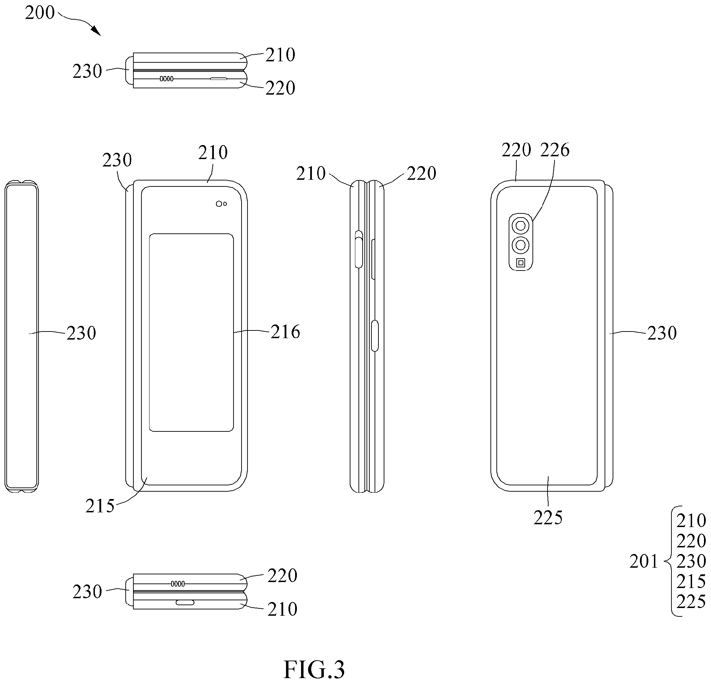

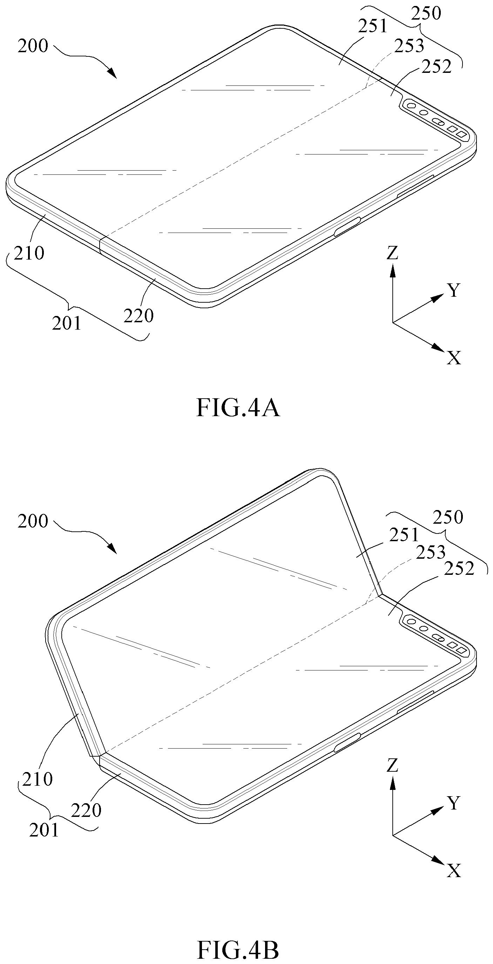

FIG. 2 is a diagram illustrating an unfolded status of an electronic device 200 according to embodiments. FIG. 3 is a diagram illustrating a folded status of the electronic device 200 according to embodiments. FIG. 4A is a perspective view illustrating an example of a fully unfolded status of the electronic device 200 according to embodiments. FIG. 4B is a perspective view illustrating an example of a partially unfolded intermediate status of the electronic device 200 according to embodiments.

The electronic device 200 in FIGS. 2, 3, 4A and 4B, which is an example of the electronic device 101 illustrated in FIG. 1, may be a foldable or bendable electronic device.

FIGS. 4A and 4B illustrate a spatial coordinate system defined by an X-axis, a Y-axis, and a Z-axis orthogonal to each other. Here, the X-axis may indicate a width direction of an electronic device, the Y-axis may indicate a length direction of the electronic device, and the Z-axis may indicate a height (or thickness) direction of the electronic device. In the description below, a "first direction" may refer to a direction parallel to the Z-axis.

Referring to FIGS. 2 and 3, in an embodiment, the electronic device 200 may include a foldable housing 201 and a flexible or foldable display 250 (hereinafter, simply referred to as a "display" 250) (e.g., the display module 160 in FIG. 1) disposed in a space formed by the foldable housing 201. According to an embodiment, a surface on which the second display 250 is disposed (or a surface on which the second display 250 is viewed from the outside of the electronic device 200) may be referred to as a front surface of the electronic device 200. In addition, an opposite surface of the front surface may be referred to as a rear surface of the electronic device 200. In addition, a surface that encloses a space between the front surface and the rear surface may be referred to as a side surface of the electronic device 200.

According to embodiments, the foldable housing 201 may include a first housing structure 210, a second housing structure 220 including a sensor area 222, a first rear cover 215, and a second rear cover 225, and a hinge structure 230. Here, the hinge structure 230 may include a hinge cover that covers a foldable portion of the foldable housing 201. The foldable housing 201 of the electronic device 200 is not limited to the shapes and assemblies illustrated in FIGS. 2 and 3, but may be implemented by other shapes or other combinations and/or assemblies of components. For example, in another embodiment, the first housing structure 210 and the first rear cover 215 may be integrally formed, and the second housing structure 220 and the second rear cover 225 may be integrally formed.

According to embodiments, the first housing structure 210 may be connected to the hinge structure 230, and may include a first surface oriented in a first direction, and a second surface oriented in a second direction opposite to the first directions. The second housing structure 220 may be connected to the hinge structure 230, and may include a third surface oriented in a third direction, and a fourth surface oriented in a fourth direction opposite to the third directions. The second housing structure 220 may rotate relative to the first housing structure 210 with respect to the hinge structure 230. A status of the electronic device 200 may be deformed between a folded status and an unfolded status.

According to an embodiment, the first surface may face the third surface in a status in which the electronic device 200 is fully folded, and the first surface and the third surface may face the same direction in a status in which the electronic device 200 is fully unfolded.

According to embodiments, the first housing structure 210 and the second housing structure 220 may be disposed on opposite sides of a folding axis A, and may have overall symmetrical shapes with respect to the folding axis A. As described below, the first housing structure 210 and the second housing structure 220 may have different angles or distances from each other depending on whether the electronic device 200 is in an unfolded status, in a folded status, or in a partially unfolded intermediate status. According to an embodiment, the second housing structure 220, unlike the first housing structure 210, may further include the sensor area 222 in which various sensors are disposed. However, the first housing structure 210 and the second housing structure 220 may have mutually symmetrical shapes in other areas.

According to embodiments, as illustrated in FIG. 2, the first housing structure 210 and the second housing structure 220 may form a recess that accommodates the second display 250 therein. According to an embodiment, due to the sensor area 222, the recess may have two or more different widths along a direction perpendicular to the folding axis A. According to an embodiment, the recess may have a first width w1 between a first portion 210a of the first housing structure 210 parallel to the folding axis A and a first portion 220a of the second housing structure 220 formed at a periphery of the sensor area 222. The recess may have a second width w2 between a second portion 210b of the first housing structure 210 and a second portion 220b of the second housing structure 220 that does not correspond to the sensor area 222, and is parallel to the folding axis A. In this case, the second width w2 may be formed to be longer than the first width w1. According to an embodiment, the first portion 220a and the second portion 220b of the second housing structure 220 may have different distances from the folding axis A. The width of the recess is not limited to the illustrated example. In another embodiment, the recess may have a plurality of widths due to a shape of the sensor area 222 or due to asymmetric-shaped portions of the first housing structure 210 and the second housing structure 220. According to embodiments, the sensor area 222 may be formed to have a certain area adjacent to one corner of the second housing structure 220. However, the arrangement, shape, and size of the sensor area 222 are not limited to those in the illustrated example. For example, in another embodiment, the sensor area 222 may be provided to another corner of the second housing structure 220 or any area between an upper end corner and a lower end corner. In an embodiment, components for performing various functions embedded in the electronic device 200 may be exposed to a front surface of the electronic device 200 via the sensor area 222 or via one or more openings provided in the sensor area 222. In embodiments, the components may include various types of sensors. The sensors may include at least one of, for example, a front camera, a receiver, or a proximity sensor. According to embodiments, the sensor area 222 may be omitted from the second housing structure 220, or may be formed at a position different from those illustrated in the drawings.

According to embodiments, at least a portion of the first housing structure 210 and the second housing structure 220 may be formed of a metal material or a non-metal material having the rigidity of a level selected to support the second display 250. The at least a portion formed of the metal material may provide a ground plane of the electronic device 200, and may be electrically connected to a ground line formed on a PCB disposed in the foldable housing 201.

According to embodiments, the first rear cover 215 may be disposed at one side of the folding axis A on the rear surface of the electronic device 200, and may have, for example, a substantially rectangular periphery. The periphery may be enclosed by the first housing structure 210. Similarly, the second rear cover 225 may be disposed at the other side of the folding axis A on the rear surface of the electronic device 200, and a periphery of the second rear cover 225 may be enclosed by the second housing structure 220.

According to embodiments, the first rear cover 215 and the second rear cover 225 may have substantially symmetrical shapes with respect to the folding axis A. However, the first rear cover 215 and the second rear cover 225 may not necessarily have mutually symmetrical shapes, and in another embodiment, the electronic device 200 may include the first rear cover 215 and the second rear cover 225 with various shapes. In still another embodiment, the first rear cover 215 may be integrally formed with the first housing structure 210, and the second rear cover 225 may be integrally formed with the second housing structure 220.

According to embodiments, the first rear cover 215, the second rear cover 225, the first housing structure 210, and the second housing structure 220 may form a space in which various components (e.g., a PCB, or a battery) of the electronic device 200 may be disposed. According to an embodiment, one or more components may be disposed or visually exposed on the rear face of the electronic device 200. For example, at least a portion of a sub-display may be visually exposed via a first rear area 216 of the first rear cover 215. In another embodiment, one or more components or sensors may be visually exposed via a second rear area 226 of the second rear cover 225. In embodiments, the sensors may include a proximity sensor and/or a rear camera.

According to embodiments, a front camera exposed to the front surface of the electronic device 200 via the one or more openings provided in the sensor area 222 or a rear camera exposed via the second rear area 226 of the second rear cover 225 may include one lens or a plurality of lenses, an image sensor, and/or an image signal processor. Aflash may include, for example, a light-emitting diode or a xenon lamp. In some embodiments, two or more lenses (e.g., an infrared camera lens, a wide-angle lens, and a telephoto lens) and image sensors may be disposed on one surface of the electronic device 200.

Referring to FIG. 3, the hinge cover may be disposed between the first housing structure 210 and the second housing structure 220 so as to cover an internal component (e.g., the hinge structure 230). According to an embodiment, the hinge structure 230 may be covered by a portion of the first housing 310 and a portion of the second housing 320, or may be exposed to the outside depending on the status of the electronic device 200 (the unfolded status, the intermediate status, or the folded status).

According to an embodiment, as illustrated in FIG. 2, when the electronic device 200 is in the unfolded status (e.g., a fully unfolded status), the hinge structure 230 may be covered by the first housing structure 210 and the second housing structure 220, and thus the hinge structure 230 may not be exposed. For another example, as illustrated in FIG. 3, when the electronic device 200 is in the folded status (e.g., a fully folded status), the hinge structure 230 may be exposed to the outside between the first housing structure 210. and the second housing structure 220. For another example, when the first housing structure 210 and the second housing structure 220 are in the intermediate status in which the first housing structure 210 and the second housing structure 220 are folded with a certain angle therebetween, a portion of the hinge structure 230 may be exposed to the outside between the first housing structure 210 and the second housing structure 220. However, in this case, the exposed area may be smaller than that in the fully folded state. In an embodiment, the hinge structure 230 may include a curved surface.

According to embodiments, the second display 250 may be disposed on a space formed by the foldable housing 201. For example, the second display 250 may be seated on a recess formed by the foldable housing 201, and may be viewed from the outside via the front surface of the electronic device 200. For example, the second display 250 may configure most of the front surface of the electronic device 200. Accordingly, the front surface of the electronic device 200 may include the second display 250, and a partial area of the first housing structure 210 and a partial area of the second housing structure 220 adjacent to the second display 250. In addition, the rear surface of the electronic device 200 may include the first rear cover 215, a partial area of the first housing structure 210 adjacent to the first rear cover 215, the second rear cover 225, and a partial area of the second housing structure 220 adjacent to the second rear cover 225.

According to embodiments, the second display 250 may refer to a display with at least a portion that is deformable into a planar surface or a curved surface. According to an embodiment, the second display 250 may include a folding area 253, a first area 251 disposed on one side of the folding area 253 (e.g., a left side of the folding area 253 illustrated in FIG. 2), and a second area 252 disposed on the other side of the folding area 253 (e.g., a right side of the folding area 203 illustrated in FIG. 2).

However, the division of the second display 250 illustrated in FIG. 2 is exemplary, and the second display 250 may be divided into different areas (e.g., four or more areas or two areas) depending on the structures or functions thereof. For example, in the embodiment illustrated in FIG. 2, the areas of the display 250 may be divided by the folding area 203 extending parallel to the folding axis A. However, in another embodiment, the areas of the display 250 may be divided based on another folding axis (e.g., a folding axis parallel to a width direction of an electronic device).

According to embodiments, the second display 250 may be coupled to or disposed adjacent to a touch panel provided with a touch sensing circuit and a pressure sensor capable of measuring a touch intensity (pressure). For example, the second display 250 may be coupled to or disposed adjacent to a touch panel that detects an electromagnetic resonance (EMR) type stylus pen, an example of the touch panel.

According to embodiments, the first area 251 and the second area 252 may have overall symmetrical shapes with respect to the folding area 253. However, unlike the first area 251, the second area 252 may include a notch that is cut due to presence of the sensor area 222, but may have a shape symmetrical to that of the first area 251 in other areas. In other words, the first area 251 and the second area 252 may include mutually symmetrical portions, and mutually asymmetrical portions.

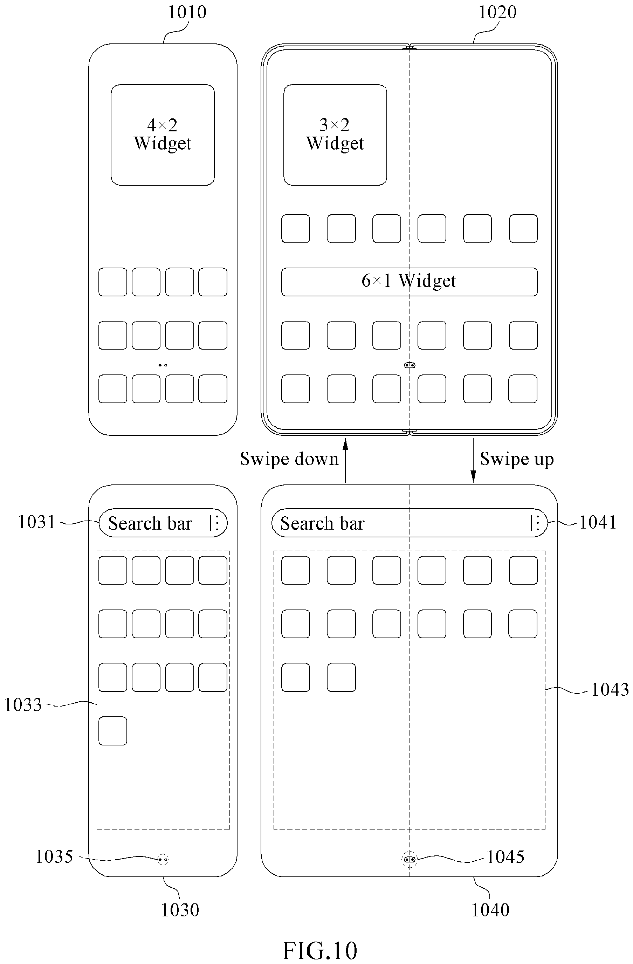

According to embodiments, edge thicknesses of the first area 251 and the second area 252 may be different from an edge thickness of the folding area 253. The edge thickness of the folding area 253 may be formed to be thinner than the thicknesses of the first area 251 and the second area 252. In terms of thickness, the first area 251 and the second area 252 may have asymmetric shapes when the first area 251 and the second area 252 are viewed in the cross-sections thereof. For example, an edge of the first area 251 may be formed to have a first radius of curvature, and an edge of the second area 252 may be formed to have a second radius of curvature different from the first radius of curvature. In another embodiment, in terms of thickness, the first area 251 and the second area 252 may have symmetrical shapes when the first area 251 and the second area 252 are viewed in the cross-sections thereof, which are described below in detail via embodiments described with reference to FIG. 10A and the drawings below FIG. 10A.

Hereinafter, operations of the first housing structure 210 and the second housing structure 220 and respective areas of the second display 250 depending on the status (e.g., the folded status, the unfolded status, or the intermediate status) of the electronic device 200 are described.

According to embodiments, when the electronic device 200 is in the unfolded status (e.g., FIG. 2), the first housing structure 210 and the second housing structure 220 may be disposed to be oriented in the same direction while forming an angle of 180 degrees therebetween. A surface of the first area 251 and a surface of the second area 252 of the second display 250 may form 180 degrees relative to each other, and may be oriented in the same direction (e.g., a front direction of the electronic device). The folding area 253 may form the same plane as those of the first area 251 and the second area 252.

According to embodiments, when the electronic device 200 is in the folded status (e.g., FIG. 3), the first housing structure 210 and the second housing structure 220 may be disposed to face each other. The surface of the first area 251 and the surface of the second area 252 of the second display 250 may face each other while forming a narrow angle (e.g., an angle between 0 and 10 degrees) relative to each other. At least a portion of the folding area 253 may be formed of a curved surface having a certain curvature.

According to embodiments, when the electronic device 200 is in the intermediate status, the first housing structure 210 and the second housing structure 220 may be disposed to form a certain angle relative to each other. The surface of the first area 251 and the surface of the second area 252 of the second display 250 may form an angle larger than that in the folded status and smaller than that in the unfolded state. The at least a portion of the folding area 253 may be formed of a curved surface having a certain curvature. The curvature may be smaller than that in the folded status.

FIG. 4A illustrates a fully unfolded status of the electronic device 200, and FIG. 4B illustrates an intermediate status in which the electronic device 200 is partially unfolded. As described above, a status of the electronic device 200 may be deformed between a folded status and an unfolded status. According to an embodiment, the electronic device 200 may be folded in two manners, including an "in-folding" type in which a front surface of the electronic device 200 is folded to form an acute angle when viewed in a direction of a folding axis (e.g., the axis A in FIG. 2), and an "out-folding" type in which the front surface of the electronic device 200 is folded to form an obtuse angle. For example, when the electronic device 200 is in the folded status in a manner of the in-folding type, a first surface of the first housing structure 210 may face a third surface of the second housing structure 220. When the electronic device 200 is in the fully unfolded status, the first surface of the first housing structure 210 and the third surface of the second housing structure 220 may be oriented in the same direction (e.g., a direction parallel to a Z axis).

In addition, for example, when the electronic device 200 is folded in a manner of the out-folding type, a second surface of the first housing structure 210 may face a fourth surface of the second housing structure 220.

In addition, the electronic device 200 may include a plurality of hinge axes (e.g., two parallel hinge axes including the A axis in FIG. 2 and another axis parallel to the A axis). In this case, the electronic device 200 may be folded in a manner of a "multi-folding" type in which the in-folding type and the out-folding type are combined.

The in-folding type may refer to a status in which the second display 250 is not exposed to the outside in a fully folded status. The out-folding type may refer to a status in which the second display 250 is exposed to the outside in the fully folded state. FIG. 4B illustrates the intermediate status in which the electronic device 200 is partially unfolded in an in-folded process.

For convenience, descriptions below are focused on a status in which the electronic device 200 is folded in a manner of the in-folding type. However, it should be noted that such descriptions may be also similarly applied to a status in which the electronic device 200 is folded in a manner of the out-folding type.

The electronic device according to embodiments may be one of various types of electronic devices. The electronic devices may include, for example, a portable communication device (e.g., a smartphone), a computer device, a portable multimedia device, a portable medical device, a camera, a wearable device, or a home appliance. The electronic device according to an embodiment is not limited to those described above.

It should be appreciated that embodiments and terms used herein are not intended to limit the technological features set forth herein to particular embodiments, and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. For example, the expression, "at least one of A, B and C," should be understood as including only A, only B, only C, both A and B, both A and C, both B and C, or all of A, B, and C. Terms such as "1st" and "2nd," or "first" and "second" may be used to simply distinguish a corresponding component from another, and do not limit the components in other aspect (e.g., importance or order). It is to be understood that when an element (e.g., a first element) is referred to, with or without the term "operatively" or "communicatively," as "coupled with," "coupled to," "connected with," or "connected to" another element (e.g., a second element), it indicates that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

embodiments as set forth herein may be implemented as software (e.g., the program 140) including one or more instructions that are stored in a storage medium (e.g., an internal memory 136 or external memory 138) that is readable by a machine (e.g., the electronic device 101 in FIG. 1). For example, a processor (e.g., the processor 120) of the machine (e.g., the electronic device 101) may invoke at least one of the one or more instructions stored in the storage medium, and execute the at least one. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" indicates that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to embodiments may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. When distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

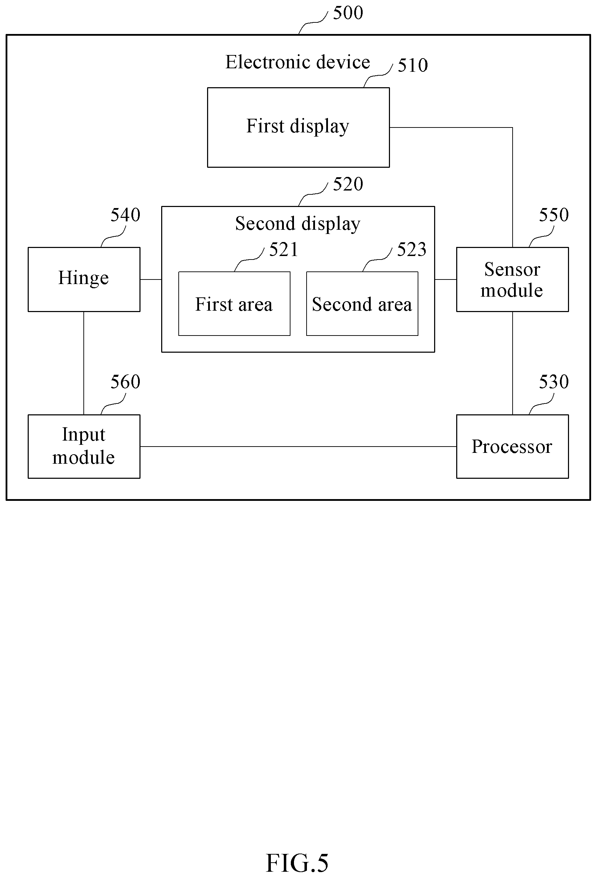

FIG. 5 is a block diagram of an electronic device with an expandable display according to an embodiment. Referring to FIG. 5, an electronic device 500 according to an embodiment (e.g., the electronic device 101 in FIG. 1, and the electronic device 200 in FIGS. 2, 3, 4A and 4B) may include a first display 510, a second expandable display 520 (hereinafter, referred to as a "second display") (e.g., the second display 250 in FIGS. 4A and 4B), and a processor 530 (e.g., the processor 120 in FIG. 1). The electronic device 500 may selectively further include a hinge 540, a sensor module 550 (e.g., the sensor module 176 in FIG. 1 or other sensor interface), and an input module 560 (e.g., the input module 150 in FIG. 1 or other input interface). The first display 510, the second display 520, the processor 530, the hinge 540, the sensor module 550, and the input module 560 may be connected to one another via a communication bus.

The second display 520 may be, for example, one of a foldable display, a rollable display, and a slidable display. The expansion of the second display 520 may refer to an operation in which a display area (e.g., an exposed or visible display area) is expanded. For example, the rollable display may be expanded as a rolled portion is unrolled, and the foldable display may be expanded as a folded portion is unfolded. The slidable display may be expanded as a rolled portion is rolled or a covered portion is exposed. The display area that is expanded according to the expansion of the second display 520 may be activated, and the electronic device 500 may provide an appropriate additional task related to an existing task via the expanded display area.

According to embodiments, the first display 510 and the second display 520 may correspond to two different display devices, or may correspond to different portions of the same single display device.

For example, when the first display 510 and the second display 520 correspond to different portions of the same single display device, the first display 510 may correspond to a first area 521 of the second expandable display 520, and the second display 520 may correspond to a display area including both the first area 521 and the expanded second area 523.

The second display 520 may include the first area 521 and the second area 523. The "first area" 521 (e.g., the first area 251 in FIG. 2) may correspond to a display area that is activated before the second display 520 is expanded. In addition, the "second area" 523 (e.g., the second area 252 in FIG. 2) may correspond to a display area that is additionally activated in a status in which the second display 520 is expanded. The second display 520 may activate both the first area 521 and the second area 523 in an expanded status. When the second display 520 is expanded, the first area 521 may be referred to as an "existing display area," and the second area 523 may be referred to as an "additional display area."

For example, when the first display 510 and the second display 520 correspond to the two different display devices, the first display 510 may correspond to a display installed in the first rear area 216 of the rear cover 215 of the electronic device 200 described above with reference to FIG. 2, and the second display 520 may correspond to the second display 250 included in the front surface of the electronic device 200 in FIGS. 4A and 4B. Positions of the first display 510 and the second display 520 may be interchanged with each other, but are not necessarily limited thereto.

Hereinafter, for convenience of description, a case in which the first display 510 and the second display 520 are the two different display devices is described as an example, but is not limited thereto. The same description may be applied even when the first display 510 and the second display 520 are different portions of the same single display device.

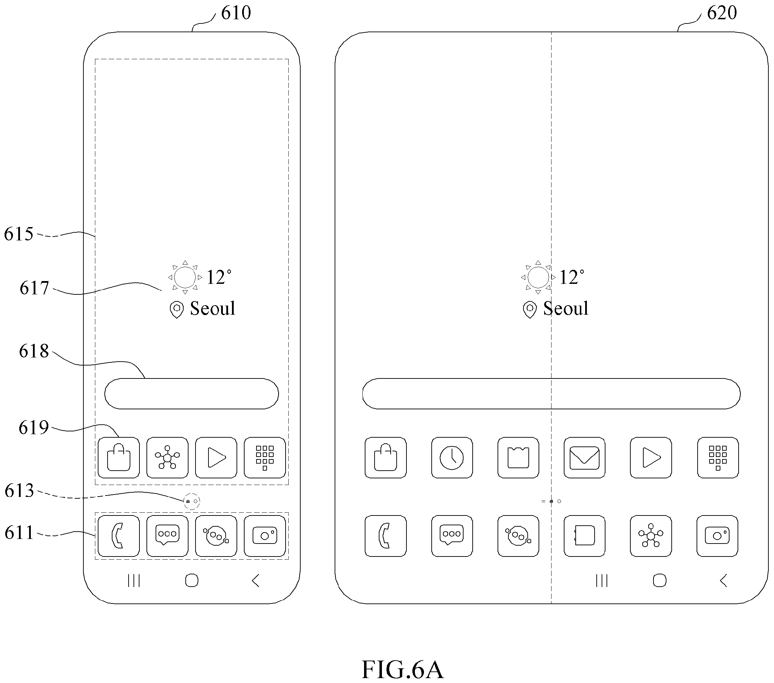

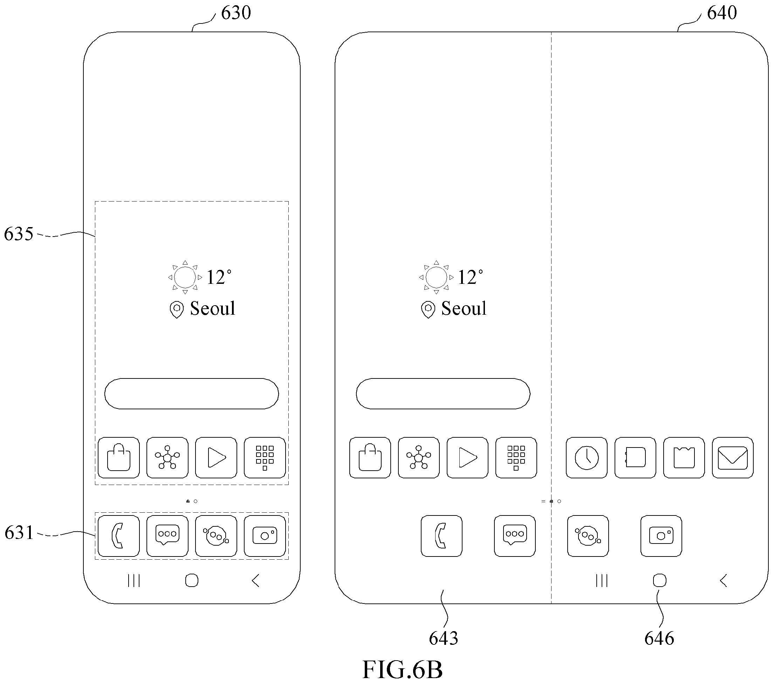

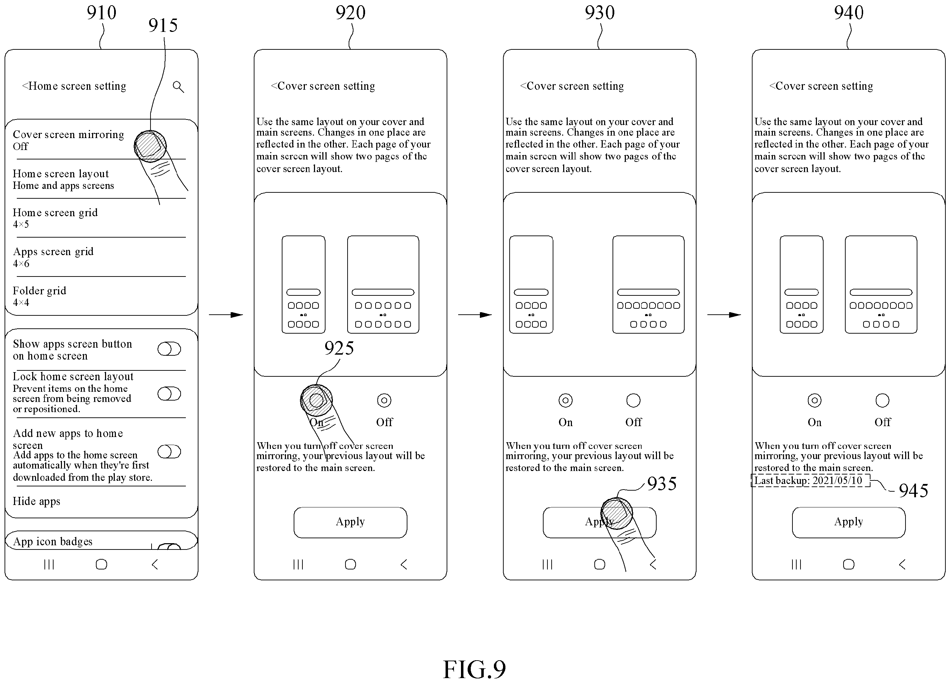

The processor 530 may provide a UI for receiving a setting a mode among a first mode of configuring one or more second contents on a second screen (e.g., a second screen 620 in FIG. 6A) of the second display 520 independently of one or more first contents displayed on a first screen (e.g., a first screen 610 in FIG. 6A) of the first display 510, and a second mode of configuring the second contents on the second screen (a second screen 640 in FIG. 6B) in synchronization with the first contents. FIG. 9 below may be referred to as an example of a UI screen that receives a user setting for a screen configuration mode.

The term "mode" as used herein, which is a mode for setting whether to synchronize a screen configuration between different displays (the first display 510 and the second display 520), may be referred to as a "screen configuration mode." For example, the first mode may be referred to as a "sync off mode" or an "out-of-synchronization mode" in that the first mode is a mode in which synchronization is released. The second mode may be referred to as a "sync on mode" or a "synchronization setting mode" in that the second mode is a mode in which synchronization is set.

A "screen" may correspond to a screen in the sense of software provided to a user via a display (e.g., the first display 510 and the second display 520) that is a hardware device. A "first screen" may correspond to, for example, a screen of a page currently displayed to the user's eyes among multiple pages provided to the user via the first display 510. The first screen may be referred to as a "cover screen" in that the first screen is displayed in one area (e.g., the first rear area 216 in FIG. 2) of a cover (e.g., the rear cover 215 in FIG. 2) of the electronic device 500. In addition, a "second screen" may correspond to, for example, a screen of a page that is currently visible to the user's eyes among multiple pages provided to the user via the second display 520. The second screen may be referred to as a "main screen" in that the second screen is displayed in a main area of a front surface of the electronic device 500.

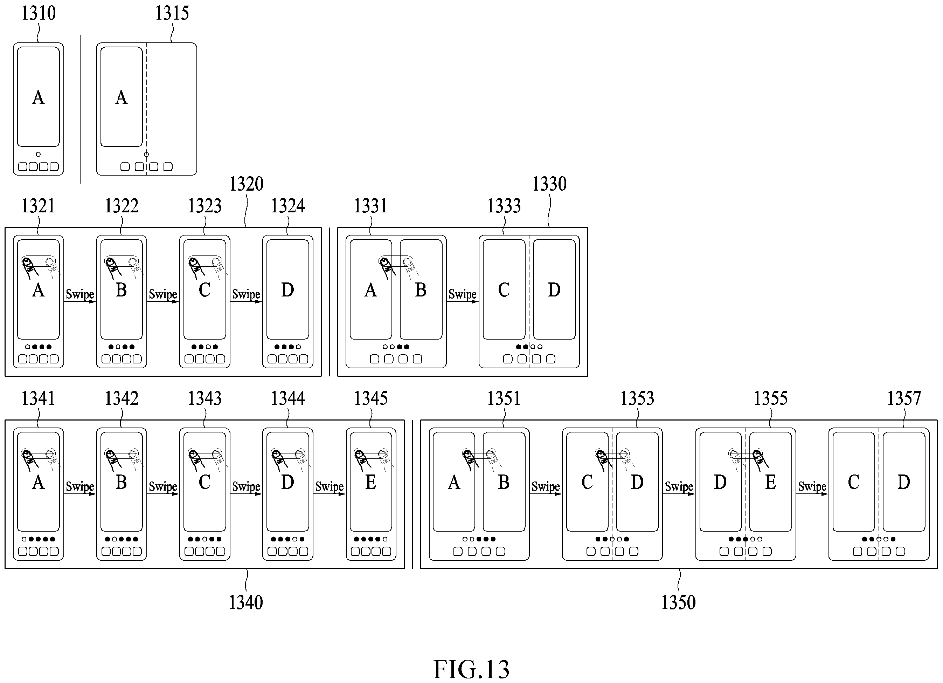

A "page" may correspond to a screen unit viewed by the user's eyes. As described in more detail with reference to FIG. 10 below, the page may include multiple content groups, and the content group may include multiple contents. A size of one page and/or a number of contents displayed on the one page may vary depending on a screen size (or an aspect ratio) of a corresponding display. For example, when screen(s) (e.g., second screen(s)) of a large-sized display (e.g., the second display) are synchronized via synchronization based on screen(s) (e.g., first screen(s)) shown on a small-sized display (e.g., the first display 510), two pages provided via the first screen (e.g., the first screen 630 in FIG. 6B) of the first display 510 may be displayed as one page of the second screen (e.g., the second screen 640 in FIG. 6B) of the second display 520. A configuration of pages displayed on the second screen 640 may vary depending on a number of pages provided via the first screen 630. A page provided via the first screen 630 may be referred to as a "first page," and a page provided via the second screen 640 may be referred to as a "second page." A method of configuring pages of the second screen 640 depending on the number of pages provided via the first screen 630 is described in more detail with reference to FIG. 13 below.

A "content" may be used to encompass, for example, all of various interfacing objects displayed on a screen, such as a folder, a widget, an app icon, and a shortcut icon, but is not necessarily limited thereto. A "first content" may refer to a content belonging to a content group displayed on the first screen 610 or 630, and a "second content" may refer to a content belonging to a content group displayed on the second screen 620 or 640. The first content and the second content may be the same content or different contents depending on whether synchronization is performed.

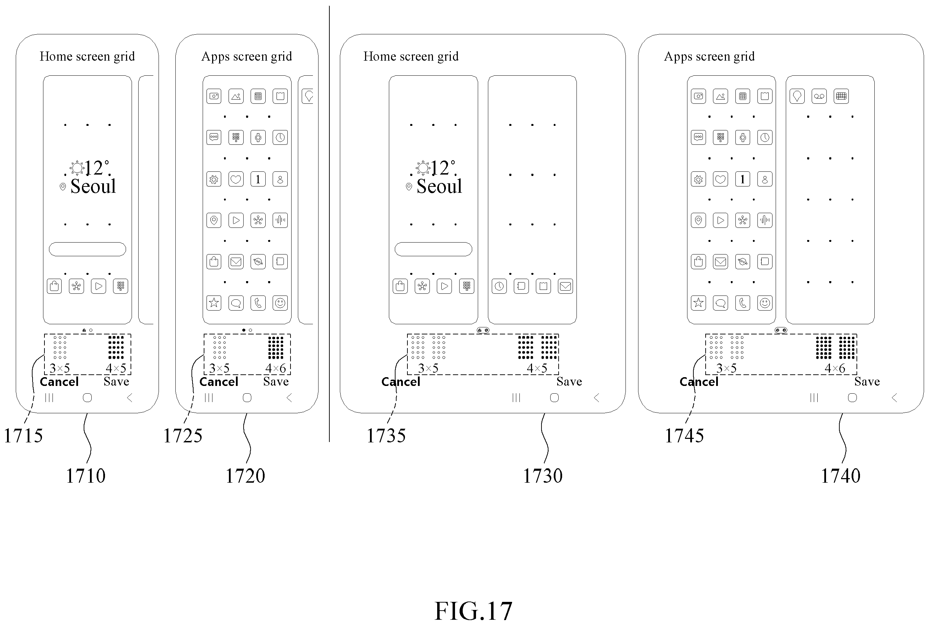

In an embodiment, a size of one page may vary depending on a size (aspect ratio) of a display (e.g., the first display 510 and the second display 520) that displays a corresponding page. The number of content(s) displayed on the one page may vary depending on, for example, an aspect ratio or a grid set by a user to correspond to each display, as illustrated in FIGS. 17A and 17B below.

"Synchronization" may include, for example, simultaneously performing tasks performed on the first display 510 and the second display 520, processing, as one integrated pool, input/output from the first display 510 and the second display 520 and the tasks performed on the first display 510 and the second display 520, controlling a start, a processing procedure, or a processing result of the tasks performed on the first display 510 and the second display 520 to be consistent with one another even when the tasks are independently processed on the first display 510 and the second display 520, or performing the tasks performed on the first display 510 and the second display 520 in operative association with each other. Alternatively, when there is a first set of one or more contents being displayed or capable of being displayed on the first display 510 and a second set of one or more contents being displayed or capable of being displayed on the second display 520, "synchronization" may refer to, for example, allowing the first set and the second set to be configured in the same manner, or allowing at least some of one or more contents included in the first set and the second set to have common features. In addition, "synchronization" may be also understood to include, for example, allowing at least one of display properties such as a display format, display style, content arrangement order, content position, or the like for one or more first contents displayed on the first screen 630 to be reflected in the same or similar manner in the display of one or more second contents displayed on the second screen 640, or mirroring in which the second contents are displayed on the second screen 640 in the same manner as the one or more first contents when the one or more first contents are displayed on the first screen 630. In addition, in the above-described examples, "synchronization" is described as matching, based on the first display 510 or the first screen 630, the task performed on the second display 520 or the second contents (or display properties of the second contents) displayed on the second screen 640 to the task performed on the first display 510 or the first contents displayed on the first screen 630 (or display properties of the first contents) in the same manner. However, synchronization may be performed based on the second display 520 or the second screen 640 depending on a system setting of the electronic device 500 or a user input. In addition, "synchronization" may include various meanings such as combining different examples among the above-described examples, replacing at least a portion of one example with a portion of another example, changing the at least a portion, or the like, but "synchronization" is not limited to the above-described meanings or examples of synchronization, and may have an expanded or embodied meaning via descriptions or embodiments below.

The processor 530 may configure the second screen 620 or 640 depending on a mode that is set via a UI (e.g., the UI screen 920 in FIG. 9). For example, when a first mode is set via the UI, the processor 530 may configure the second contents on the second screen 620 independently of the first contents. The second screen 620 in FIG. 6A may be referred to as an example of a second screen on which the second contents are configured independently of the first contents.

Alternatively, when a second mode is set via the UI, the processor 530 may configure the second contents on at least a portion of the second screen 640 in synchronization with the first contents. The second screen 640 in FIG. 6B below may be referred to as an example of a second screen on which the second contents are configured in synchronization with the first contents.

The processor 530 may display, based on whether the second display 520 is expanded, one screen among the first screen 610 or 630 and the second screen 620 or 640 configured depending on a mode set by the user. For example, when the second display 520 is not expanded, the processor 530 may activate the first display 510 to display the first contents on the first screen 610 or 630. Alternatively, when the second display 520 is expanded, the processor 530 may activate the second display 520 to display the second contents configured depending on the mode set by the user on at least a portion of the second screen 620 or 640. The processor 530 may determine, for example, based on a folding angle sensed by the sensing module 550 to be described below, whether the second display 520 is expanded.

For example, when the second display 520 is not expanded, the processor 530 may activate the first display 510 and deactivate the second display 520. Alternatively, when the second display 520 is expanded, the processor 530 may activate the second display 520 and deactivate the first display 510. In some embodiments, the processor 530 may concurrently activate the first display 510 and the second display 520.

In the electronic device 500 according to an embodiment, the aspect ratios of the first display 510 and the second display 520 may be different from each other. As the second display 520 is expanded, a size of the second display 520 may be expanded from a first size corresponding to a size of the first display 510 to a second size larger than the first size.

The hinge 540 may allow the electronic device 500 to be folded or unfolded. As the electronic device 500 is folded or unfolded with respect to the hinge 540, the second display 520 (e.g., the second display 250 in FIGS. 4A and 4B) may be also folded or unfolded. The second display 520 may be disposed on at least one side of the electronic device 500, and may include the first area 521 disposed on one side of the hinge 540, and the second area 523 disposed on the other side of the hinge 540. For example, when a folding axis of the hinge 540 is an in-folding type, the second display 520 (e.g., the second display 250 in FIGS. 4A and 4B) may include the first area 521 disposed on the one side of the hinge 540, and the second area 523 disposed on the other side of the hinge 540.

The sensor module 550 (e.g., the sensor module 176 in FIG. 1) may sense a folding angle of the electronic device 500. The sensor module 550 may be disposed in the hinge 540 to, for example, sense a number of gear rotations, and may sense the folding angle based on the number of gear rotations. The sensor module 550 may sense a folding start time point and an angle at which folding stops, in addition to the folding angle.

The sensor module 550 may include, for example, a Hall sensor, an acceleration sensor, and/or a gyroscope sensor (e.g., a gyroscope). The acceleration sensor and/or the gyro sensor may sense the folding angle of the electronic device 500. For example, the Hall sensor may be a transducer for generating an electrical signal (e.g., a voltage) in response to a magnetic field. The Hall sensor may generate an electrical signal with a relatively high intensity when the magnetic field has a high intensity, and may generate an electrical signal of a relatively low intensity when the magnetic field has a low intensity. When a status of the electronic device 500 is changed from a fully unfolded status to a folded status, the Hall sensor may be closer to a magnetic material, and may sense a folding status of the second display 520 in response to a magnetic field of the magnetic material. In addition, the Hall sensor may detect the folding angle via an intensity of an electrical signal generated in response to the magnetic field.

It is described above that the sensor module 550 senses the folding status of the second display 520 and detects the folding angle. In some embodiments, the processor 530 may sense, based on a sensing result of the sensor module 550, the folding status of the second display 520. For example, the processor 530 may receive, from the Hall sensor, an electrical signal according to the sensing of the magnetic field. The processor 530 may receive the electrical signal from the Hall sensor, thereby sensing the folding status of the second display 520.

The input module 560 may receive a user input. The input module 560 may receive the user input by, for example, sensing a preset specific gesture (e.g., long press, swipe up/down, and tap) of the user via any area of a display (the first display 510 and the second display 520). Alternatively, the input module 560 may receive the user input by sensing a voice or motion of the user, using at least one sensor (e.g., a microphone or a motion sensor) in the sensor module 550.

FIGS. 6A and 6B are diagrams respectively illustrating a first screen of a first display and a second screen of a second display before and after synchronization is performed according to a screen configuration mode of an electronic device, according to embodiments.

FIG. 6A illustrates a first screen 610 of the first display (e.g., the first display 510 in FIG. 5) and a second screen 620 of the second display displays (e.g., the second display 250 in FIGS. 4A and 4B and the second display 520 in FIG. 5), when the screen configuration mode is set to a first mode, that is, before synchronization is performed.

The first screen 610 may correspond to, for example, a home screen, and an aspect ratio of the first screen 610 may be a 4x5 arrangement. The home screen displayed on the first screen 610 may be a first page screen or graphical UI (GUI) on which user interaction is possible, the first page screen or GUI that is displayed on the first display 510 when the electronic device (e.g., the electronic device 101 in FIG. 1, the electronic device 200 in FIG. 2, and the electronic device 500 in FIG. 5) is turned on. The home screen may include, for example, a hot-seat area 611, a page indicator area 613, and a main area 615.

In the hot-seat area 611, shortcut icons for executing frequently used applications, such as a call, text message, the Internet, and a camera, may be displayed. In the hot-seat area 611, a page indicator indicating a position of a page (e.g., a first page) displayed on the first screen 610 may be displayed. As the first page is switched (e.g., from the first page to a second page), a position of a bar or dot activated in the page indicator may be moved. The page indicator may highlight and display a first page of the home screen being displayed on the first display 510. In the main area 615, a content group including, for example, at least one of a folder, a widget indicating time and a widget 617 indicating weather, a search bar 618, and multiple app icons 619 may be displayed, but is not necessarily limited thereto.

The second screen 620 may correspond to, for example, the home screen, and an aspect ratio of the second screen 620 may be different from that of the first screen 610. For example, the aspect ratio of the second screen 620 may be 6x5. When the screen configuration mode is set to the first mode, one or more second contents displayed on the second screen 620 may be configured independently of shortcut icons displayed in the hot-seat area 611 and a content group displayed in the main area 615 of the first screen 610.

FIG. 6B illustrates the first screen 630 of the first display (e.g., the first display 510 in FIG. 5) and the second display 640 of the second display (e.g., the second display 250 in FIG. 2 and the second display 520 in FIG. 5) when the screen configuration mode is set to a second mode, that is, after synchronization is performed.

The first screen 630 may correspond to the home screen in the same manner as the first screen 610. An aspect ratio of the first screen 630 may be, for example, 4x5. When the screen configuration mode is set to the second mode, one or more second contents displayed on the second screen 640 may be configured in synchronization with shortcut icons displayed in the hot-seat area 631 and a content group displayed in the main area 635 of the first screen 630. According to synchronization, an aspect ratio of the second screen 640 may be also changed to 8x5 based on (e.g., two times the width of) the aspect ratio of the first screen 630.

The shortcut icons displayed in the hot-seat area 631 of the first screen 630 may be displayed in a hot-seat area of the second screen 640, and the content group displayed in the main area 635 of the first screen 630 may be displayed in at least a partial area (e.g., a first area 643) of the second screen 640. Second contents displayed in a second area 646 of the second screen 640 may be, for example, contents which are the same as first contents belonging to a content group displayed in a main area of a next page of the first screen 630.

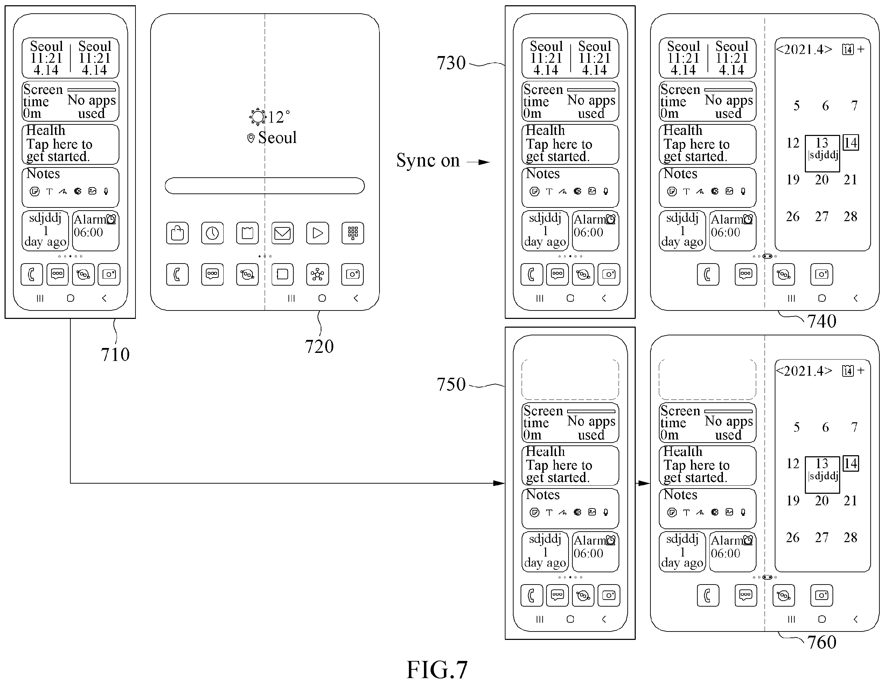

FIG. 7 is a diagram illustrating a situation in which synchronization is performed based on a first screen of a first display in an electronic device according to an embodiment. FIG. 7 illustrates screens before synchronization (a first screen 710 and a second screen 720) and screens after synchronization (a first screen 730 and a second screen 740), and a second screen 760 that is changed in operative association with the first screen 750.

For example, the first screen 710 may be a reference screen for synchronization, and a user may set a screen configuration mode to a second mode.

An electronic device (e.g., the electronic device 101 in FIG. 1, the electronic device 200 in FIGS. 2, 3, 4A and 4B, and the electronic device 500 in FIG. 5) may configure second contents on the second screen in synchronization with one or more first contents displayed on the first screen 710 as the screen configuration mode is set to the second mode. Accordingly, the first screen 730 after synchronization may remain the same as shown in the first screen 710 before synchronization, and the one or more first contents displayed on the first screen 730 may be displayed in the same manner on the second screen 740 after synchronization. In a left-sided first area of the second screen 740, contents belonging to a corresponding page of the first screen 730 may be displayed in the same manner as those of the first screen 730. In addition, in a right-sided second area of the second screen 740, first contents belonging to a next page of a corresponding first page of the first screen 730 may be displayed in the same manner. For example, when an aspect ratio of the first screen 730 is smaller than that of the second screen 740, all four shortcut icons displayed in a hot-seat area of the first screen 730 may be displayed in a hot-seat area of the second screen 740.

In addition, in a situation in which the screen configuration mode is set to the second mode, a modification occurring on the first screen, which may be a reference screen for synchronization, may be interlocked in real time and reflected in the same manner on the second screen.

For example, the user may modify the first contents (e.g., a widget and an icon) included in the first screen 750 in a situation in which the screen configuration mode is set to the second mode. Here, a "modification" to the first contents may be understood to include, for example, not only changing a screen configuration of the first screen, such as deleting, moving, and adding the first contents, but also modifying the first contents themselves, such as changing names of the first contents.

When the user modifies the first contents included in the first screen 750, a modification made on the first screen 750 may be also interlocked in real time on the second screen 760, and thus the second screen may be changed as shown in the second screen 760.

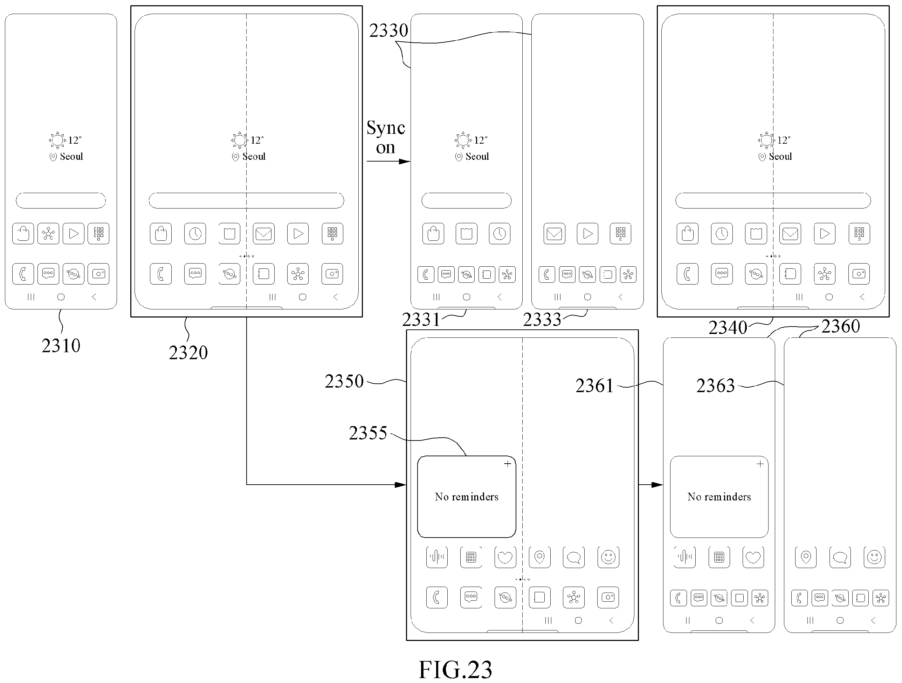

The real-time interlocking of screens according to the above-described synchronization may be applied in the same manner even when the second screen 760 is a reference screen for synchronization, rather than the first screen 750. An operation performed when the second screen is the reference screen for synchronization is described in more detail with reference to FIG. 23 below.

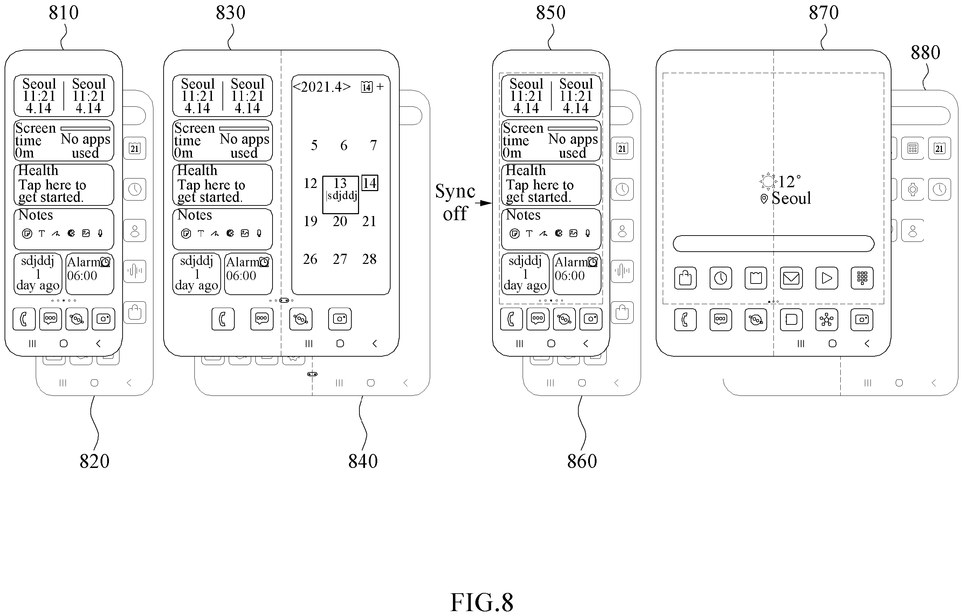

FIG. 8 is a diagram illustrating a first screen of a first display and a second screen of a second display when a screen configuration mode of an electronic device is switched from a second mode to a first mode, according to an embodiment. FIG. 8 illustrates synchronized screens (a first screen 810 and a second screen 830) and screens (a first screen 850 and a second screen 870) that are out of synchronization (sync off) according to switching of a screen configuration mode, according to an embodiment. A method of setting a screen configuration mode according to an embodiment is described in more detail with reference to FIG. 9 below.

The first screen 810, the second screen 830, the first screen 850, and the second screen 870 may correspond to a home screen, and the first screen 820, the second screen 840, and the first screen 860 and the second screen 880 may correspond to an app screen switched from the home screen. A method of switching between the home screen and the app screen is described in more detail with reference to FIG. 10 below.

For example, the user may switch a setting of the screen configuration mode from a second mode to a first mode in a situation in which the second screen 830 is synchronized according to the first screen 810 that is a reference screen for synchronization. In this case, the first screen 810 that is a reference screen for synchronization may remain the same as shown in the first screen 850, and the synchronized second screen 830 may be restored (e.g., changed back) to the second screen 870 before synchronization. The electronic device may maintain usability of the first screen 810 in the same manner on the first screen 850 regardless of whether the second screen 830 is restored to the second screen 870.

When the screen configuration mode is switched from the second mode to the first mode, the electronic device (e.g., the electronic device 101 in FIG. 1, the electronic device 200 in FIGS. 2, 3, 4A and 4B, and the electronic device 500 in FIG. 5) may restore the second screen 870 including a second content configured independently of a first content displayed on the first screen 810. The electronic device may store, for example, information ("screen information of a second screen") related to the second content included in the second screen at a time point when the second mode is set, thereby allowing existing usability of the second screen 870 to be maintained. The screen information of the second screen may be invoked upon switching from the second mode to the first mode to be used to restore the second screen 870. Even when the second screen 870 is restored from a previous second screen, the electronic device may maintain data used during synchronization, thereby allowing usability of the second screen to be maintained even after synchronization.

In the same manner as the home screen that is restored to a screen before synchronization according to switching of the screen configuration mode, the app screen may be also restored.

For example, when the screen configuration mode is switched from the second mode to the first mode, the first screen 820 corresponding to the app screen may remain the same as shown in the first screen 860. However, as the screen configuration mode is switched from the second mode to the first mode, the second screen 840 corresponding to the app screen may be restored to the second screen 880 in the same manner as the second screen 830 corresponding to the home screen that is restored to the second screen 870.

FIG. 9 is a diagram illustrating a method of setting a screen configuration mode of an electronic device according to an embodiment. FIG. 9 illustrates UI screens 910, 920, 930, and 940 provided to set a screen configuration mode according to an embodiment.

For example, when a user who sets a screen configuration mode selects a "Home screen settings" menu among menu setting items of the electronic device, the screen 910 may be displayed. The screen 910 may include, but is not necessarily limited to, for example, various detailed setting items including "Cover screen mirroring" for setting the screen configuration mode, "Home screen layout" for setting a layout of a home screen, "Home screen grid" for setting an aspect ratio of the home screen, "Apps screen grid" for setting an aspect ratio of an app screen, and "Folder grid" for setting an aspect ratio of a folder.

When the user selects a "Cover screen mirroring" item 915 from among multiple detailed setting items displayed on the screen 910, an electronic device (e.g., the electronic device 101 in FIG. 1, the electronic device 200 in FIGS. 2, 3, 4A and FIG. 4B, and the electronic device 500 in FIG. 5) may provide a screen 920 for receiving a user setting for the screen configuration mode.

For example, an explanatory phrase for a cover screen mirroring function may be displayed at an upper end of the screen 920, and a UI for setting the screen configuration mode (e.g., an on/off button) may be displayed at a lower end of the screen 920.

The screen configuration mode displayed on the screen 920 may be set to "Off" as a default. The screen configuration mode that is set to "Off' may correspond to a case in which the screen configuration mode is set to the above-described first mode.

When the screen configuration mode is set to "Off," a cover screen (first screen) and a main screen (second screen) each may be used independently. In addition, when the screen configuration mode is switched from "On" to "Off," a layout of the cover screen may be maintained, and a layout of the main screen may be restored to a most recent layout before synchronization (i.e., before the screen configuration mode was switched from "Off" to "On").

The user may select an "On" button 925 of a UI displayed on the screen 920, and then select an "Apply" button 935, as shown in the screen 930, thereby setting the screen configuration mode to "On." The screen configuration mode that is set to "On" may correspond to a case in which the screen configuration mode is set to the above-described second mode.

As the screen configuration mode is set to "On," the electronic device may display, for example, time information 945 indicating a time point when information on the layout of the main screen was stored. The time information 945 may be displayed at a lowermost end of a guide phrase as shown in the screen 940, and may indicate a time point when a previous layout of the main screen was stored for backup. The time information 945 may be displayed in the form of, for example, "YYYY/MM/DD," but is not limited thereto.

When the screen configuration mode that is set to "On" via the UI, the electronic device may store information (screen information of the second screen) related to a content (e.g., a second content) included in the main screen at a time point when the screen configuration mode that is set to "On" for future restoration (e.g., the second content that may be used when the screen configuration mode that is subsequently set to "Off'). The second content included in the main screen may be configured independently of a first content of the cover screen. The electronic device may store the information related to the content included in the main screen in, for example, a memory in the electronic device or a cloud. The electronic device may store the information related to the content included in the main screen in operative association with an account of the user.

When the screen configuration mode is set to "On," the electronic device may synchronize (mirror), based on the cover screen, the home screen and the app screen in the main screen. Two pages of the cover screen may be configured as one page of the main screen. In addition, second contents (e.g., shortcut icons) displayed in a hot-seat area of the main screen may be replaced with first contents (e.g., shortcut icons) included in a hot-seat area of the cover screen.

FIG. 10 is a diagram illustrating a home screen and an app screen switched on each of a first display and a second display when a screen configuration mode of an electronic device changes according to an embodiment. FIG. 10 illustrates a first screen 1010 and a second screen 1020 indicating the home screen, and a first screen 1030 and a second screen 1040 indicating the app screen.

The home screen may be a first page screen or GUI on which user interaction is possible, the first page or GUI that is displayed on a display (e.g., the first display 510 and the second display 520 in FIG. 5) when an electronic device (e.g., the electronic device 101 in FIG. 1, the electronic device 200 in FIGS. 2, 3, 4A and 4B, and the electronic device 500 in FIG. 5) is turned on or unlocked. A main page (e.g., a first page) of the home screen may display, for example, at least one of shortcut icons for executing frequently used applications, a main menu switch key, time, and weather. When the user selects the main menu switch key, a menu screen may be displayed. An empty space may be allowed on the home screen, and the user may arrange a widget and/or an overlapping app icon on the home screen. The user may change a layout of the home screen via a "long press" input of maintaining selection of a content displayed on the home screen for a predetermined period of time. The user may enter a page editing screen of the home screen via a "long press" input of maintaining selection of the empty space on the home screen for a predetermined period of time.

For example, the user may enter the app screen such as the first screen 1030 or the second screen 1040 via a "swipe up" gesture on the first screen 1010 or the second screen 1020 indicating the home screen.

An app search bar for inputting an app name to be searched may be displayed in an uppermost area 1031 or 1041 of the first screen 1030 or the second screen 1040 corresponding to the app screen. For example, a content group including multiple app icons may be displayed in a main area 1033 or 1043 of the first screen 1030 or the second screen 1040, but is not limited thereto. In addition, a page indicator may be displayed in a lower end area 1035 or 1345 of the first screen 1030 or the second screen 1040.

The empty space may not be allowed on the app screen, unlike the home screen. The user may not arrange the widget on the app screen, and may not arrange the overlapping app icon on the app screen. In the same manner as the home screen, the user may change a layout of the app screen via a "long press" input for a content displayed on the app screen.

For example, the user may enter the home screen such the first screen 1010 or the second screen 1020 via a "swipe down" gesture on the first screen 1030 or the second screen 1040 indicating the app screen.

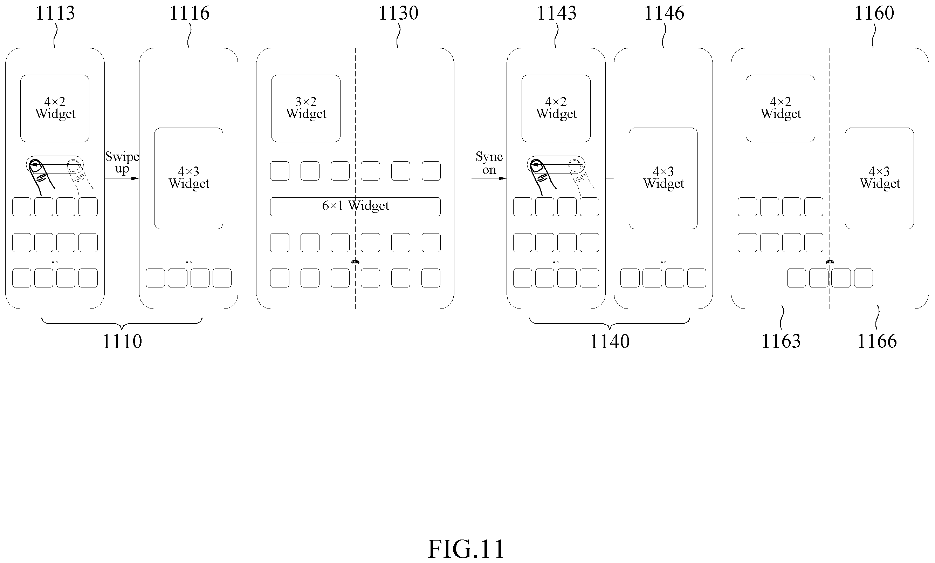

FIG. 11 is a diagram illustrating a method of configuring pages of a first screen and a second screen when a screen configuration mode of an electronic device is set to a second mode, according to an embodiment. FIG. 11 illustrates page configurations of a first screen 1140 and a second screen 1160 after synchronization when a second screen 1130 is synchronized based on a first screen 1110, according to an embodiment.

For example, the first screen 1110 may include two pages (e.g., a first-first page 1113 and a first-second page 1116), and the second screen 1130 includes one second page. A user may switch a screen from the first-first page 1113 to the first-second page 1116 via a "horizontal swipe" gesture.

When the user sets a screen configuration mode to a second mode in the above-described situation, an electronic device (e.g., the electronic device 101 in FIG. 1, the electronic device 200 in FIGS. 2, 3, 4A and 4B, the electronic device 500 in FIG. 5) may switch the second screen 1116 to the second screen 1160 in which the first-first page 1113 and the first-second page 1116 of the first screen 1110 are configured as one page. A content included in the first-first page 1113 may be displayed in synchronization with a left-sided first area 1163 of the second screen 1160, and a content included in the first-second page 1116 may be displayed in synchronization with a right-sided second area 1166 of the second screen 1160. The first screen 1110 may remain the same as shown in the first screen 1140 including a first page 1143 and a second page 1146.

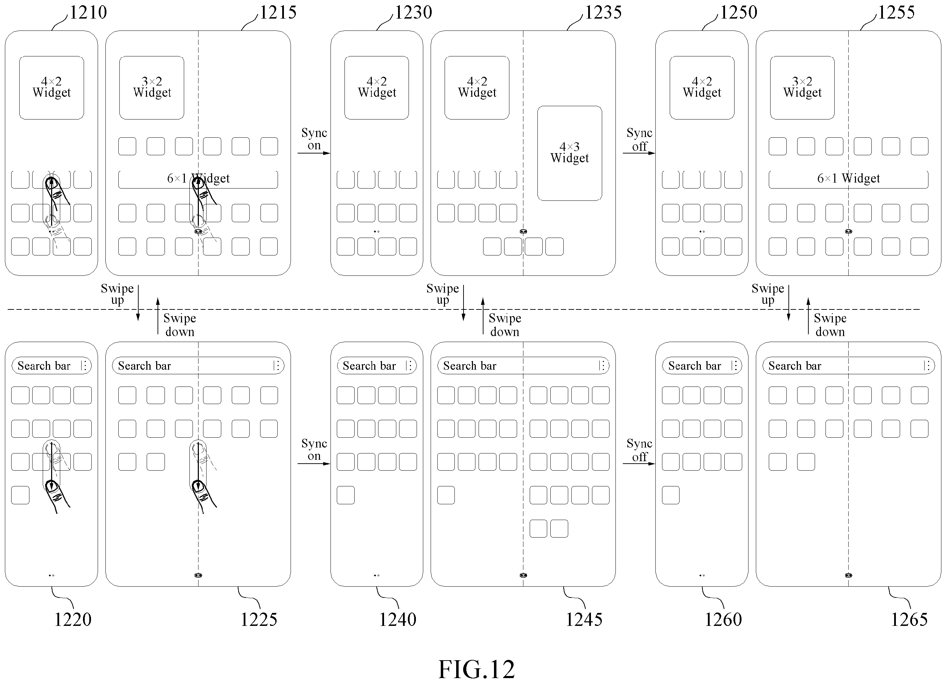

FIG. 12 is a diagram illustrating a home screen and an app screen when a screen configuration mode of an electronic device is switched in an order of a first mode, a second mode, and the first mode, according to an embodiment.

FIG. 12 illustrates a first screen 1220 and a second screen 1225 indicating an app screen switched via a user input (e.g., a "swipe up" gesture) of swiping, from bottom to top, a first screen 1210 of a first display (e.g., the first display 510 in FIG. 5) and a second screen 1215 of a second display (e.g., the second display 520 in FIG. 5) indicating the home screen, when the screen configuration mode is set to the first mode according to an embodiment. Hereinafter, even when there is no additional description, it may be understood that switching from the home screen to the app screen is performed by the user input (e.g., the "swipe up" gesture) of swiping a corresponding screen from bottom to top, and switching from the app screen to the home screen is performed by the user input (e.g., a "swipe down" gesture) of swiping the corresponding screen from top to bottom.

For example, the screen configuration mode may be switched from the first mode to the second mode. In this case, while in the second mode, the first screen 1230 indicating the home screen may remain the same as shown in the first screen 1210, and the second screen 1235 indicating the home screen may be synchronized to the first screen 1230. According to synchronization, contents displayed on the first screen 1230 may be displayed in the same manner in a left-sided first area of the second screen 1235, and contents displayed on a next page of the first screen 1230 may be displayed in the same manner in a right-sided second area of the second screen 1235.

As the home screen is synchronized, the app screen may be also synchronized.

When the screen configuration mode is switched from the first mode to the second mode, the first screen 1240 indicating the app screen may remain the same as shown in the first screen 1220, and the second screen 1245 indicating the app screen may be synchronized to the first screen 1240. According to synchronization, contents displayed on the first screen 1240 may be displayed in the same manner in a left-sided first area of the second screen 1245, and contents displayed on a next page of the first screen 1240 may be displayed in the same manner in a right-sided second area of the second screen 1245.

Thereafter, the screen configuration mode may be switched from the second mode back to the first mode. As synchronization is not performed in the first mode, the first screen 1250 indicating the home screen may remain the same, and the second screen 1255 indicating the home screen may be restored to the second screen 1215. Thus, the second screen 1255 may have the same configuration as that of the second screen 1215 before synchronization.

When the home screen is not synchronized, the app screen may also not be synchronized.

When the screen configuration mode is switched from the second mode to the first mode, the first screen 1260 indicating the app screen may remain the same as synchronization is not performed in the first mode, and the second screen 1265 indicating the app screen may be restored to the second screen 1225. Thus, the second screen 1265 may have the same configuration as that of the second screen 1225 before synchronization.

FIGS. 13A, 13B and 13C are diagrams illustrating determination of a page configuration of a second screen according to a number of pages displayed on a first screen when an electronic device is synchronized, according to an embodiment. FIG. 13A illustrates a page configuration of the second screen 1315 when the number of pages displayed on the first screen is one as shown in the first screen 1310. FIG. 13B illustrates a page configuration of the second screen 1330 when the number of pages displayed on the first screen is greater than one and even as shown in the first screen 1320. FIG. 13C illustrates a page configuration of the second screen 1350 when the number of pages displayed on the first screen is greater than one and odd as shown in the first screen 1340.

As described above, two first pages of a first screen of a first display (e.g., the first display 510 in FIG. 5) may be configured as one second page of a second display (e.g., the second display 520 in FIG. 5). In addition, a page indicator illustrated on each of the screens 1310, 1315, 1320, 1330, 1340, and 1350 may indicate a number of pages of a corresponding screen.

An electronic device according to an embodiment (e.g., the electronic device 101 in FIG. 1, the electronic device 200 in FIGS. 2, 3, 4A and 4B, and the electronic device 500 in FIG. 5) may generate, based on the number of first pages displayed on the first screen, a second page of the second screen on which a second content is displayed.

For example, the number of first pages in the first screen 1310 may be one. In this case, the electronic device may generate a second page of the second screen 1315 such that one first page of the first screen 1310 is arranged in a left-sided first area of the second page of the second screen 1315, and an empty page is arranged in a right-sided second area of the second screen 1315.

As another example, the number of first pages in the first screen 1320 may be four, and may include a first-first page 1321, a first-second page 1322, a first-third page 1323, and a first-fourth page 1324.

The electronic device may apply, to one second page in the screen 1330, two first pages of the first screen 1320 according to the number (e.g., four) of the first pages 1321, 1322, 1323, and 1324 displayed on the first screen 1320. The number of first pages displayed on the first screen 1320 may be four, that is an even number greater than one. Thus, the electronic device may generate the second page such that an even number of first pages 1321, 1322, 1323, and 1324 of the first screen 1320 are displayed in pairs on the second screen 1330. The first pages 1321 and 1322 may be applied to a second-first page 1331, and the first pages 1323 and 1324 may be applied to a second-second page 1333.

For example, when the user moves a page by a swipe input in the first screen 1320, the page may be moved based on a page unit (first page unit) of the first screen 1320 in an order of the first-first page 1321, the first-second page 1322, the first-third page 1323, and the first-fourth page 1324. Alternatively, when the user moves a second page by a swipe input in the second screen 1330, the page may be moved from the second-first page 1331 to the second-second page 1333 based on a page unit (second page unit) of the second screen.

As another example, the number of first pages in the first screen 1340 may be five, and may include a first-first page 1341, a first-second page 1342, a first-third page 1343, and a first-fourth page 1344, and a first-fifth page 1345.

The electronic device may apply, to one second page in the second screen 1350, two first pages of the first screen 1340 according to the number of first pages 1341, 1342, 1343, 1344 and 1345 displayed on the first screen 1340. The number of first pages 1341, 1342, 1343, 1344, and 1345 displayed on the first screen 1340 is five, that is an even odd number greater than one. Thus, the electronic device may generate the second page such that the first pages 1341, 1342, 1343, and 1344 are displayed in pairs on the second screen 1350. The first-first page 1341 and the first-second page 1342 may be applied to a second-first page 1351, and the first-third page 1343 and the first-fourth page 1344 may be applied to a second-second page 1353. The last first-fifth page 1345 of the first screen 1340 may not have a page to be paired with, and thus may be displayed in the same manner as a second-third page 1355 by forming a pair with a previous page, the first-fourth page 1344.

For example, when the user moves a page by a swipe input in the first screen 1340, the page may be moved based on a page unit (first page unit) of the first screen 1340 in an order of the first-first page 1341, the first-second page 1342, the first-third page 1343, the first-fourth page 1344, and the first-fifth 1345. Alternatively, when the user moves to a second page by a swipe input in the second screen 1350, the page may be moved based on a page unit (second page unit) of the second screen 1350 in an order of the second-first page 1351, the second-second page 1353, and the second-third page 1355. In addition, when a swipe input from the second-third page 1355 to a previous page occurs, the page may be switched to a previous screen as shown in the second-second page 1357.

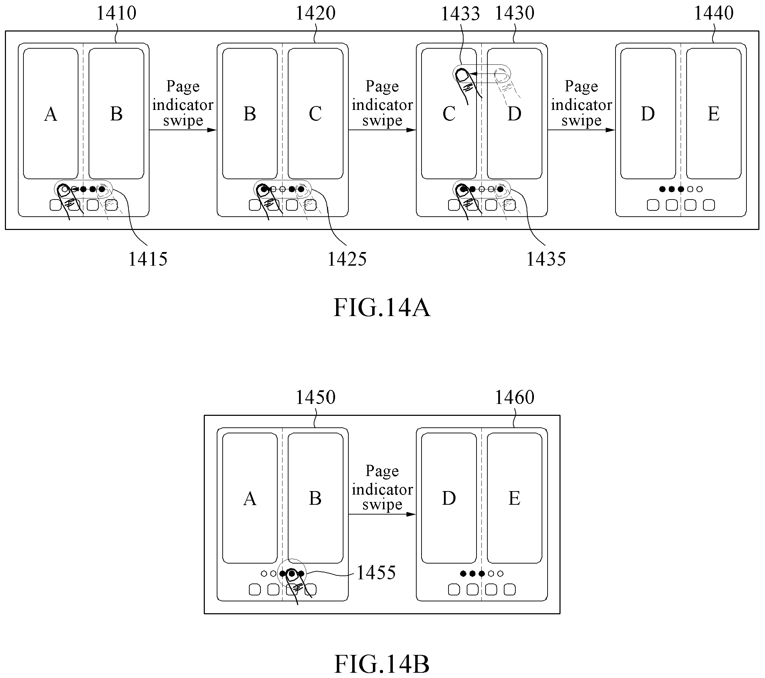

FIGS. 14A and 14B are diagrams illustrating a method of adjusting a movement unit of a second screen for each type of user input occurring on the second screen of an electronic device according to embodiments.

FIG. 14A illustrates a situation in which the second screen is moved in units of first pages as a first type of user input occurs on second pages 1410, 1420, 1430, and 1440 of the second screen.

An electronic device according to an embodiment (e.g., the electronic device 101 in FIG. 1, the electronic device 200 in FIGS. 2, 3, 4A and 4B, and the electronic device 500 in FIG. 5) may determine a unit in which the second pages 1410, 1420, 1430, and 1440 displayed on the second screen are moved for each type of user input occurring on the second screen.

For example, the second pages 1410, 1420, 1430, and 1440 of the second screen may include five first pages A, B, C, D, and E, and a first type of user input (e.g., a swipe input for page indicators 1415, 1425, and 1435) may occur on each of the second pages 1410, 1420, 1430, and 1440. In this case, in response to the swipe input for the page indicators 1415, 1425, and 1435, the electronic device may move a second page in units of first pages, that is, in units of 0.5 pages.

On the second page 1410, a left-sided first area may correspond to a first-first page "A," and a right-sided second area may correspond to a first-second page "B." The second page 1410 may correspond to a "page 1" of the second screen.

A right-to-left swipe input may occur for the page indicator 1415 displayed on the second page 1410. In this case, the second screen of the electronic device may be switched to the second page 1420, and the second page 1420 may correspond to a "page 1.5" of the second screen. In a left-sided first area of the second page 1420, the first-second page "B" corresponding to a right-sided second area of the second page 1410 may be moved and displayed. In a right-sided second area of the second page 1420, a first-third page "C" corresponding to a next 1/2 second page may be moved and displayed.

Similarly, a right-to-left swipe input may occur for the page indicator 1425 displayed on the second page 1420. The second screen of the electronic device may be switched to the second page 1430, and the second page 1430 may correspond to a "page 2" of the second screen. In a left-sided first area of the second page 1430, the first-third page "C' corresponding to a right-sided second area of the second page 1420 may be moved and displayed. In a right-sided second area of the second page 1430, a first-fourth page "D" corresponding to a next 1/2 second page may be moved and displayed.

In addition, a swipe input from the right-sided second area to a left-sided first area 1433 of the second page 1430 may occur. Here, in the same manner as a case where a right-to-left swipe input occurs for the page indicator 1435 displayed on the second page 1430, the second screen of the electronic device may be switched to the second page 1440 in units of first pages. The second pages of the second screen may include an odd number of first pages A, B, C, D, and E, the last second page 1440 of the second screen may include, as described above, a first-fifth page "E" that is a last first page and a previous page (first-fourth page "D") of the first-fifth page "E." In a left-sided first area of the second page 1440, a first-fourth page "D" corresponding to a right-sided second area of the second page 1430 may be moved and displayed. In a right-sided second area of the second page 1440, the first-fifth page "E" may be displayed. The second page 1440 may be a "page 3" that is a last page of the second screen.

When the second pages 1410, 1420, and 1430 of the second screen include four first pages A, B, C, and D, a last page of the second screen may be the second page 1430. The second page 1430 may correspond to the "page 2" of the second screen.

FIG. 14B illustrates a situation in which a movement to a last second page 1460 of the second screen is performed when a tap input for a page indicator occurs on a second page 1450 of the second screen.

For example, a second type of user input (e.g., a tap input for the page indicator 1455) may occur for the second page 1450 that is the "page 1" of the second screen. In this case, in response to the tap input for the page indicator 1455, the electronic device may determine to move directly from the second page 1450 that is the "page 1" of the second screen to the second page 1460 corresponding to the last "page 1" of the second screen. In an embodiment, the electronic device may perform a "fast page scroll" of directly moving from a first page of the second screen to a last page according to a tap input for a page indicator displayed on a second page of the second screen.

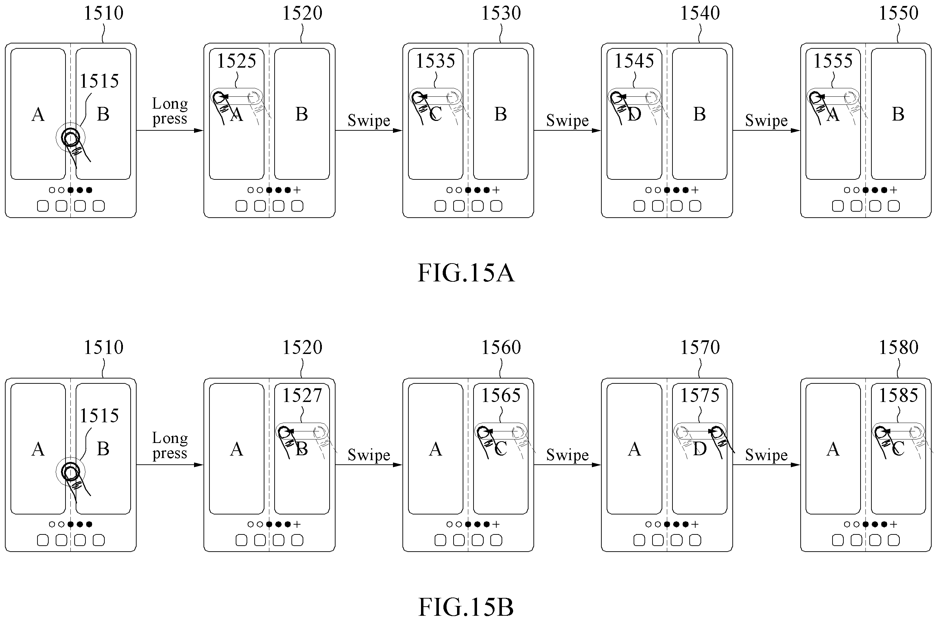

FIGS. 15A and 15B are diagrams illustrating a method of adjusting an editing area of a second page for types of user inputs with respect to a second screen of an electronic device according to embodiments.

FIG. 15A illustrates a situation in which the editing area of the second page varies depending on an area in which a third type of user input (e.g., a swipe input for a left-sided area of a corresponding second page after a long press on a home screen) occurs on second pages 1510, 1520, 1530, 1540, and 1550 of the second screen.

An electronic device according to an embodiment (e.g., the electronic device 101 in FIG. 1, the electronic device 200 in FIGS. 2, 3, 4A and 4B, and the electronic device 500 in FIG. 5) may determine editing areas of the second pages 1510, 1520, 1530, 1540, and 1550 depending on a type of user input occurring on a home screen of the second screen.

For example, a swipe input 1525 in a left direction may occur in a left-sided first area of the second page 1520 after a long press input for one area 1515 of the second page 1510 corresponding to the home screen of the second screen. In this case, the electronic device may determine an area in which the swipe input 1525 occurs on the second screen so as to be editable.

As illustrated in FIG. 15A, swipe inputs 1525, 1535, 1545, and 1555 in a left direction may occur in left-sided first areas of the second pages 1520, 1530, 1540, and 1550. In this case, the electronic device may continuously display a first page "B" corresponding to a right-sided second area of the second page 1520 without change even when a page is switched, and the electronic device may sequentially switch first pages corresponding to the left-sided first area of the second page 1520 in an order of "B," "C," "D," and "A" to enable editing of a corresponding page.

FIG. 15B illustrates a situation in which the editing area of the second page and a unit of being moved (switched) for editing vary depending on an area in which a fourth type of user input (e.g., a swipe input for a right-sided area of a corresponding second page after a long press on the home screen) occurs on second pages 1510, 1520, 1560, 1570, and 1580 of the second screen.

The electronic device according to an embodiment may determine editing areas of the second pages 1510, 1520, 1560, 1570, and 1580, and a unit of being moved for editing depending on a type of user input occurring on the home screen of the second screen.

For example, a swipe input 1527 in a left direction may occur in a right-sided second area of the second page 1520 after a long press input for one area 1515 of the second page 1510 corresponding to the home screen of the second screen occurs. The electronic device may determine an area in which the swipe input 1527 occurs on the second screen, that is, the right-sided second area of the second page 1520, to be editable, and may determine a movement unit for editing to be a first page unit.

A right-sided area of the second page 1560 may be determined as the editing area depending on the swipe input 1527, and thus a first page "A" may be continuously displayed in a left-sided first area of the second page 1560. However, a right-sided second area of the second page 1560 may be switched to a first page "C."

As another example, a swipe input 1565 in a left direction may occur in the right-sided second area of the second page 1560. The electronic device may determine an area in which the swipe input 1565 occurs on the second screen, that is, the right-sided second area of the second page 1560, to be editable.

A right-sided area of the second page 1560 may be determined as the editing area according to the swipe input 1565, and thus the first page "A" may be continuously displayed in a left-sided first area of the second page 1570. However, a right-sided second area of the second page 1570 may be switched to a first page "D."

A swipe input 1575 in a right direction may occur in the right-sided second area of the second page 1570. The electronic device may determine an area in which the swipe input 1575 occurs on the second screen, that is, the right-sided second area of the second page 1570, to be editable. Because the direction of the swipe input 1575 is reversed, a movement to a previous first page rather than a next first page may be performed. Thus, a right-sided second area of a next second page 1580 may be switched to the first page "C" rather than a first page "E."

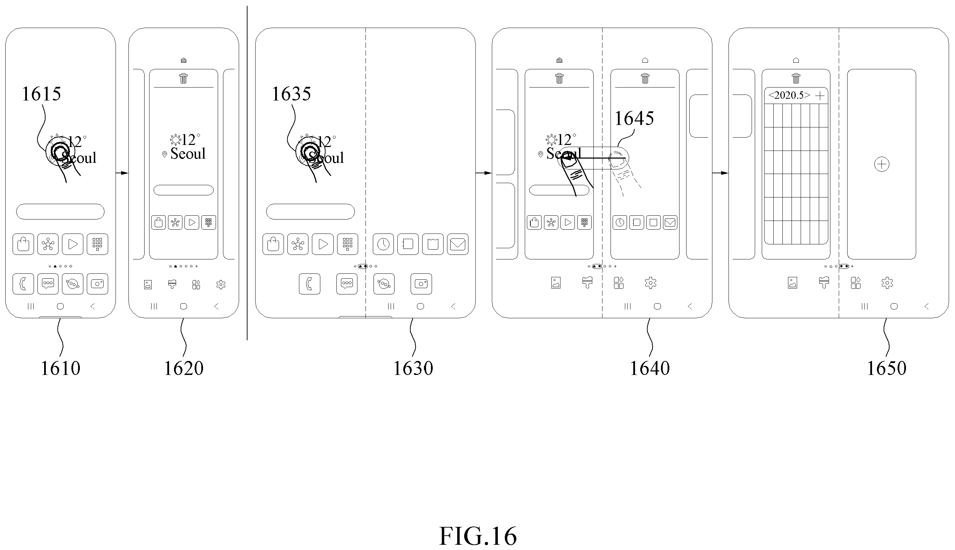

FIGS. 16A and 16B are diagrams illustrating a method of setting a home screen displayed on a first screen and a second screen of an electronic device according to an embodiment. FIG. 16A illustrates screens 1610 and 1620 showing a process of setting an option of the home screen on the first screen, and FIG. 16B illustrates screens 1630, 1640, and 1650 showing a process of setting an option of the home screen on the second screen.

For example, a long press input 1615 for one area of the screen 1610 may occur in a status in which the first screen displays the home screen as shown in the screen 1610. In this case, the screen 1610 may be switched to the option setting screen 1620 of the home screen. A process of selecting an option via the option setting screen 1620 of the home screen on the first screen may be the same as user interaction when a screen of an electronic device (e.g., the electronic device 101 in FIG. 1, the electronic device 200 in FIGS. 2, 3, 4A and 4B, and the electronic device 500 in FIG. 5) is edited. For example, when it is desired to edit the home screen of the electronic device, an editing screen may be entered via a long press input or a pinch zoom input in the same manner as the option setting screen 1620 of the home screen. Other than a page configuration (e.g., two first pages that are grouped into one set and displayed as one second page) which varies as the second screen is synchronized to the first screen, elements arranged on the editing screen may be also arranged in the same manner on the option setting screen 1620 of the home screen. Alternatively, a long press input 1635 for one area of the screen 1630 may occur in a status in which the second screen displays the home screen as shown in the screen 1630. In this case, the screen 1630 may be switched to the screen 1640 for setting an option of the home screen. The screen 1640 may be a screen entered based on a second page displayed on the second screen in a current status.

One second page of the screen 1640 may include a pair of two first pages of the first screen, and thus, a deletion or default home screen option may be set for each first page on the screen 1640. For example, when a user input (e.g., swipe input) 1645 in a left direction for the second page shown on the screen 1640 occurs, option setting pages shown in the screen 1640 may be switched in units of first pages in the same manner as page switching in the home screen.

When the screen 1650 showing a last page for setting the option of the home screen is reached by the user input, the last page and an addition page may be displayed as one group. Here, the addition page may correspond to an area for adding a page to the home screen.

FIGS. 17A and 17B are diagrams illustrating a method of setting grid options of a home screen and an app screen on each of a first screen and a second screen of an electronic device according to an embodiment.

FIG. 17A illustrates a screen 1710 for setting a grid option of the home screen on the first screen, and a screen 1720 for setting a grid option of the app screen on the first screen. FIG. 17B illustrates a screen 1730 for setting a grid option of the home screen on the second screen, and a screen 1740 for setting a grid option of the app screen on the second screen, according to an embodiment.

For example, a user may set a grid of the home screen on the first screen by selecting one of grid options 1715 (e.g., a 3x5 arrangement or a 4x5 arrangement) displayed on the screen 1710. The user may set a grid of the app screen on the first screen by selecting one of grid options 1725 (e.g., a 3x5 arrangement or a 4x6 arrangement) displayed on the screen 1720. A method of setting the grid options of the home screen and the app screen on the first screen via the screen 1710 and the screen 1720 may be the same as a case of setting a grid option of a screen of an electronic device (e.g., the electronic device 101 in FIG. 1, the electronic device 200 in FIGS. 2, 3, 4A and 4B, and the electronic device 500 in FIG. 5).

For example, when the user enters a grid setting screen, the electronic device may provide a grid option via the grid setting screen, and provide a preview screen. When the user changes the grid option, the electronic device may change the preview screen by reflecting the changed grid option in real time as the user selects a grid option. As the user presses a "save" button after checking the preview screen, the screen in which the grid option changed by the user is reflected may be displayed.

For example, when the second screen is synchronized to the first screen, the electronic device may display the grid option displayed on the second screen using the same grid option (e.g., 3x5 or 4x5) as that of the first screen. Icons indicating the grid option may be displayed as one pair, and the preview screen may be also allowed to display two first pages paired as one second page, thereby providing intuitive feedback indicating the second screen and the first screen are in an interlocked status.

Alternatively, the user may set a grid of the home screen on the second screen by, for example, selecting one of grid options 1735 (e.g., a 3x5 arrangement or a 4x5 arrangement) displayed on the screen 1730. The user may set a grid of the app screen on the second screen by selecting one of grid options 1745 (e.g., a 3x5 arrangement or a 4x6 arrangement) displayed on the screen 1740. The grid options of the home screen and the app screen on the second screen shown in the screen 1730 and the screen 1740 may be synchronized to and displayed in the same manner as the grid options of the home screen and the app screen of the first screen shown in the screen 1710 and the screen 1720. Two first pages of the first screen may be displayed as one second page of the second screen.

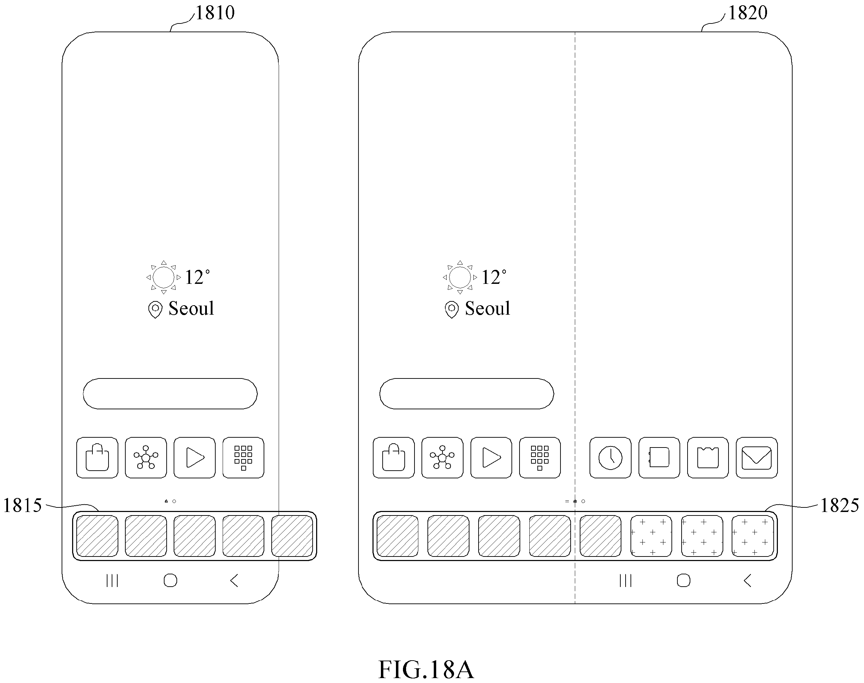

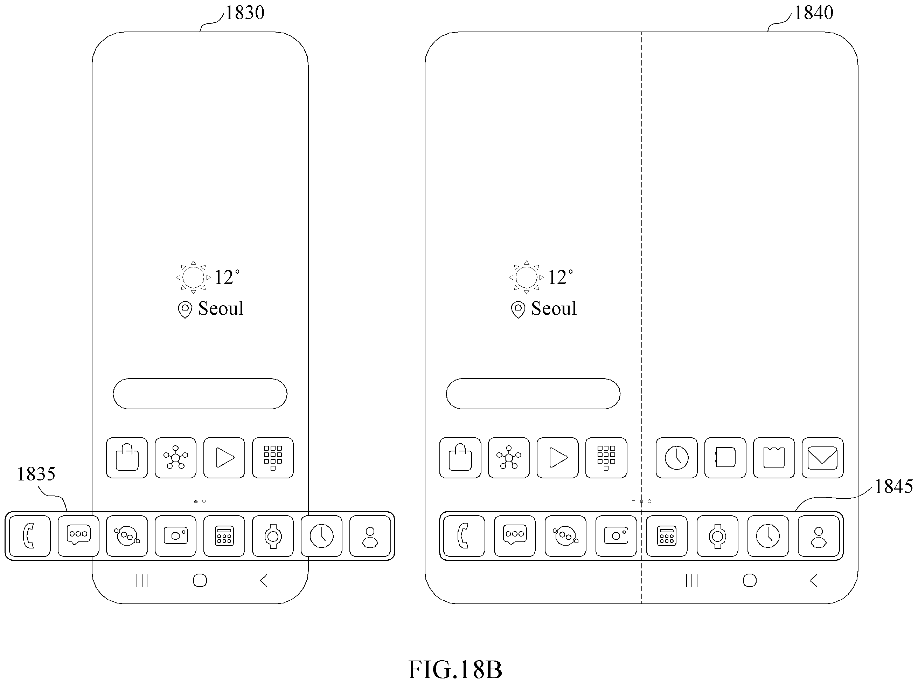

FIGS. 18A and 18B are diagrams illustrating a method of displaying a hot-seat area of each of a first screen and a second screen according to synchronization between a first display and a second display of an electronic device according to embodiments.

FIG. 18A illustrates contents displayed in a hot-seat area 1815 in a first screen 1810 and contents displayed in a hot-seat area 1825 in a second screen 1820 when a second screen 1820 of a second display (e.g., the second display 520 in FIG. 5) is synchronized based on a first screen 1810 of a first display (e.g., the first display 510 in FIG. 5).

For example, a maximum of four first contents may be displayed in the hot-seat area 1815 of the first screen 1810, and a maximum of eight second contents may be displayed in the hot-seat area 1825 in the second screen 1820. For example, the hot-seat area 1815 may correspond to a scrollable area when there are more than four first contents. For example, the hot-seat area 1815 may include five first contents and may be a scrollable area. When the second screen 1820 is synchronized based on the first screen 1810, the hot-seat area 1825 in the second screen may be synchronized to the hot-seat area 1815 in the first screen 1810. When the second screen 1820 is synchronized based on the first screen 1810 according to a second mode, an electronic device (e.g., the electronic device 101 in FIG. 1, the electronic device 200 in FIGS. 2, 3, 4A and 4B, and the electronic device 500 in FIG. 5) may configure the second contents on at least a portion of the second screen 1820 such that the number of first contents displayed in the hot-seat area 1815 of the first screen 1810 is equal to the number of second contents displayed in the hot-seat area 1825 of the second screen 1820.

Accordingly, when the number of contents included in the hot-seat area 1815 in the first screen 1810 is less than eight, the electronic device may provide, for example, a toast popup guide on the second screen 1820, and may set additional contents as non-interlocked contents, and display the additional contents in a different manner from interlocked contents. Contents displayed in each of the hot-seat areas 1815 and 1825 may correspond to, for example, frequently used shortcut icons and folders, but are not necessarily limited thereto. The contents displayed in each of the hot-seat areas 1815 and 1825 may be referred to as "hot-seat items."

FIG. 18B illustrates contents displayed in a hot-seat area 1835 in a first screen 1830 and contents displayed in a hot-seat area 1845 in a second screen 1840 when the second screen 1840 of the second display (e.g., the second display 520 in FIG. 5) is synchronized based on the first screen 1830 of the first display (e.g., the first display 510 in FIG. 5).

For example, the hot-seat area 1835 in the first screen 1830 may correspond to a scrollable area and may include eight first contents. When the second screen 1840 is synchronized based on the first screen 1830, the hot-seat area 1845 in the second screen 1840 may be synchronized to the hot-seat area 1835 in the first screen 1830. Because the hot-seat area 1835 in the first screen 1830 includes the eight first contents, eight second contents may be also displayed in the same manner in the hot-seat area 1845 in the synchronized second screen 1840.

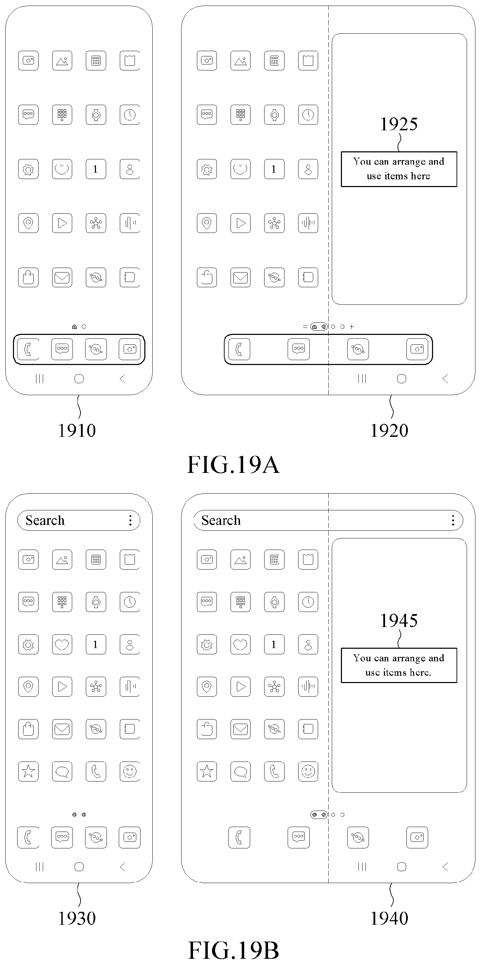

FIGS. 19A and 19B are diagrams illustrating a method of providing a guide phrase on a home screen and an app screen of a second screen when a screen configuration mode is set to a second mode according to embodiments.

FIG. 19A illustrates a guide phrase ("You can arrange and use items here") 1925 which may be provided on a home screen of a second screen 1920 when a home screen of a first screen 1910 has one first page. FIG. 19B illustrates a guide phrase ("You can arrange and use items here ") 1945 which may be provided on an app screen of a second screen 1940 when an app screen of a first screen 1930 has one first page.

When the first screen 1910 or 1930 each have one page, an electronic device according to an embodiment (e.g., the electronic device 101 in FIG. 1, the electronic device 200 in FIGS. 2, 3, 4A and 4B, and the electronic device 500 in FIG. 5) may display, via synchronization, a first page in a left-sided first area of a second page, and an empty page in a right-sided second area of the second page in the second screen 1920 or 1940. The electronic device may provide the guide phrase 1925 or 1945 via the empty page.

For example, when a user first enters the second page of the second screen 1920 or 1940, the electronic device may provide the guide phrase 1925 or 1945 a predetermined number of times (e.g., three times) on each of the home screen and the app screen.

For example, the electronic device may provide the guide phrase 1925 or 1945 a predetermined number of times (e.g., three times) before a page change by a user action occurs on the second page of the second screen 1920 or 1940.

For example, when synchronization is not performed as a screen setting mode is automatically switched by a smart switch from the second mode to the first mode, the second screen may be restored. In this case, the electronic device may initialize the number of times accumulated and counted in the second mode, and may newly re-count the number of times the guide phrase 1925 or 1945 is provided from a time point when the second screen is restored.

Depending on an embodiment, the electronic device may provide the guide phrase 1925 or 1945 on both the home screen and the app screen, or provide the guide phrase 1925 or 1945 on either the home screen or the app screen.

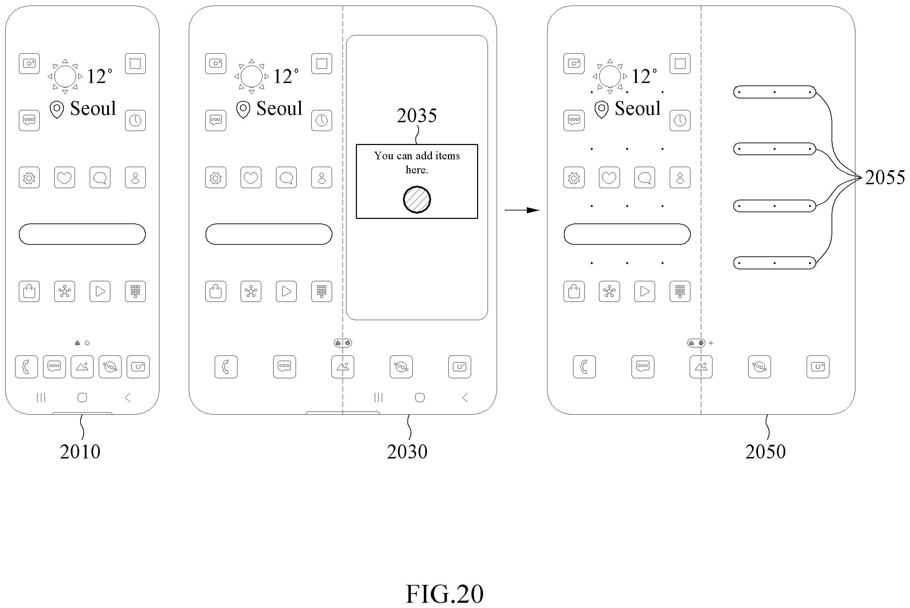

FIG. 20 is a diagram illustrating a method of editing a home screen displayed on a second screen of an electronic device according to an embodiment.

FIG. 20 illustrates a first screen 2010, a second screen 2030 synchronized to the first screen 2010, and an app movement screen 2050 switched from the second screen 2030 according to an embodiment.

For example, when the number of first pages in the first screen 2010 is one, a first page displayed on the first screen 2010 may be displayed in a left-sided first area of a second page in a home screen of the second screen 2030, and an empty page may be displayed in a right-sided second area of the second page, via synchronization. A guide phrase such as "You can add items here" may be provided on the empty page. When a user input (e.g., a long press input) 2035 occurs for the area on which the guide phrase is displayed in the second screen 2030 (i.e., the empty page), the second screen 2030 may be switched to the app movement screen 2050. The electronic device may indicate the second screen 2030 is in a status of being switched to the app movement screen 2050 by controlling display of multiple dots 2055 on the app movement screen 2050.

The user may edit a home screen of the second screen 2030 by moving positions of second contents on the app movement screen 2050.

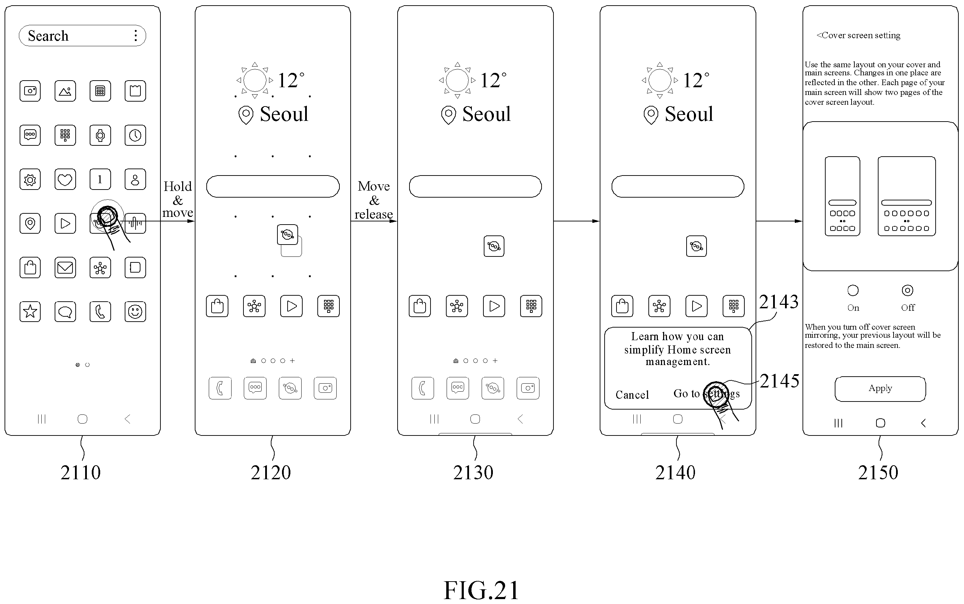

FIG. 21 is a diagram illustrating a method of guiding switching to a second mode via a home screen displayed on a first screen of an electronic device in a situation in which a screen configuration mode is set to a first mode, according to an embodiment.

FIG. 21 illustrates a situation in which screens 2140 and 2150 including a guide notifying that switching to the second mode is possible are provided as a user moves a first content included in an app screen 2110 as shown in the screens 2120 and 2130 in a status in which a screen configuration mode of an electronic device (e.g., the electronic device 101 in FIG. 1, the electronic device 200 in FIGS. 2, 3, 4A and 4B, and the electronic device 500 in FIG. 5) is set to the first mode, according to an embodiment.

For example, when the user holds and moves the first content (e.g., Internet icon) displayed on the app screen 2110 of the first screen in a status in which the user selects the first content, the app screen 2110 may be switched to the app movement screen 2120. When the user releases the first content on the app movement screen 2120, the app movement screen 2120 may be switched to the home screen 2130.

When the first content (e.g., an icon, a widget, or a folder) is moved and arranged from the app screen 2110 to the home screen 2130 in a status in which the screen configuration mode is set to the first mode, the electronic device may provide a tip popup 2143 including a phrase ("Learn how you can simplify Home screen management.") notifying that there is a method of simplifying the management of a home screen, as shown in the screen 2140. Here, "a method of simplifying the management of a home screen" may correspond to a method of switching to the second mode. For example, the electronic device may provide the tip popup 2143 when the first content is initially moved, but is not necessarily limited thereto.

The tip popup 2143 may include a "Cancel" button that may be selected when the user does not desire to move to a guide screen 2150 guiding the method of simplifying the management of the home screen, and a "Go to settings" 2145 button that may be selected when the user desires to move to the guide screen 2150.

When the user selects "Go to settings" 2145 included in the tip popup 2143, the electronic device may switch the screen 2140 to the guide screen 2150. The guide screen 2150 may guide, for example, that synchronization between the first screen and the second screen is possible via an animation. When the user selects an "Apply" button included in the guide screen 2150, the electronic device may provide, for example, the UI screens 910, 920, 930, and 940 for setting the screen configuration mode described above with reference to FIG. 9.

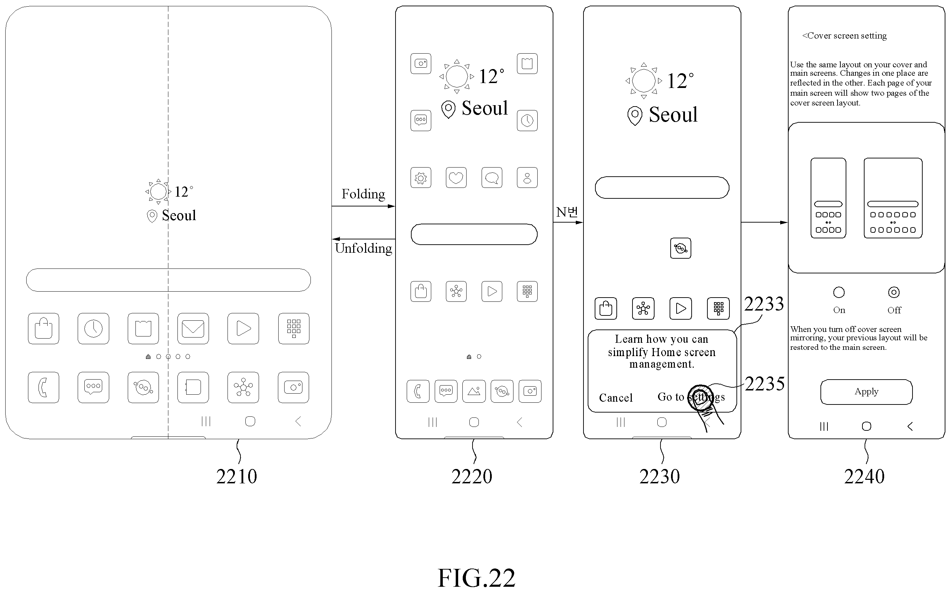

FIG. 22 is a diagram illustrating a process in which switching to a second mode is guided when an operation of expanding the second display 520 is repeated in an electronic device according to an embodiment. FIG. 22 illustrates guide screens 2230 and 2240 that are provided by an electronic device (e.g., the electronic device 101 in FIG. 1, the electronic device 200 in FIGS. 2, 3, 4A and 4B, and the electronic device 500 in FIG. 5) when switching between a second screen 2210 and a first screen 2200, that is, switching between a status in which the second display 520 is unfolded and a status in which the second display 520 is folded is repeated, according to an embodiment.

For example, when switching between the second screen 2210 and the first screen 2200 is repeated preset N times (e.g., three or five times) or more, the electronic device may provide the guide screen 2230 guiding that there is a function capable of synchronizing the second screen 2210 and the first screen 2200, as shown in the screen 2140 in FIG. 21. The guide screen 2230 may include, for example, a tip popup 2233 including a phrase ("Learn how you can simplify Home screen management.").

When the user selects "Go to settings" 2235 included in the tips popup 2233, the electronic device may switch the screen 2230 to the guide screen 2240. The guide screen 2240 may guide, for example, that synchronization between the first screen and the second screen is possible via an animation, as shown in the guide screen 2150 described above with reference to FIG. 21. When the user selects an "Apply" button included in the guide screen 2240, the electronic device may provide the UI screens 910, 920, 930, and 940 for setting the screen configuration mode described above with reference to FIG. 9, as in FIG. 21.

FIG. 23 is a diagram illustrating a situation in which synchronization is performed based on a second screen of the second display 520 in an electronic device according to an embodiment. FIG. 23 illustrates screens before synchronization (a first screen 2310 and a second screen 2320), screens after synchronization (a first screen 2330 and a second screen 2340), and a first screen 2360 that is synchronized and changed as the second screen 2320, that is a basis of synchronization, is modified to a second screen 2350, according to an embodiment.

For example, the second screen 2320 may be a reference screen for synchronization, and a user may set a screen configuration mode to a second mode.

As the screen configuration mode is set to the second mode, an electronic device may configure a first content on the first screen 2310 in synchronization with one or more second contents displayed on the second screen 2320. Accordingly, the second screen 2340 after synchronization may remain the same as shown in the second screen 2320 before synchronization, and the one or more second contents displayed on the second screen 2320 may be displayed in the same manner on the first screen 2330 after synchronization.

Second contents belonging to a left-sided first area of the second screen 2320 may be displayed in the same manner as those of the second screen 2320 on a first page 2331 of the first screen 2330. Second contents belonging to a right-sided second area of the second screen 2320 may be displayed in the same manner as those of a right-sided area of the second screen 2320 on a second page 2333 of the first screen 2330. An aspect ratio of the first screen 2330 may be smaller than an aspect ratio of the second screen 2320, and thus it may be difficult to display, in a hot-seat area of the first screen 2330, all six shortcut icons displayed in a hot-seat area of the second screen 2320. Among the six shortcut icons displayed in the hot-seat area of the second screen 2320, five shortcut icons may be displayed sequentially from a first shortcut icon in a hot-seat area of each page of the first screen 2330.

In addition, in a situation in which the screen configuration mode is set to the second mode, a modification occurring on the second screen 2320 that is a reference screen for synchronization may be interlocked in real time and displayed on the first screen 2360 in the same manner.

For example, the user may modify the second contents (e.g., a widget and an icon) included in the second screen 2320 in a situation in which the screen configuration mode is set to the second mode. Here, a "modification" to the first contents may be understood to include, for example, not only changing a screen configuration of the second screen, such as deletion, position movement, and addition of the second contents, but also modifying the second contents themselves, such as name changes of the second contents.

When the user modifies the second contents included in the second screen 2320 as shown in the second screen 2350, a modification made on the second screen 2320 may be also interlocked in real time on the first screen 2330, and thus, the electronic device may change the first screen 2330 as shown in the first screen 2360. A first area 2361 of the first screen 2360 may be configured in the same manner as a left-sided first area of the second screen 2350, and a second area 2363 of the first screen 2360 may be configured in the same manner as a right-sided second area of the second screen 2350.

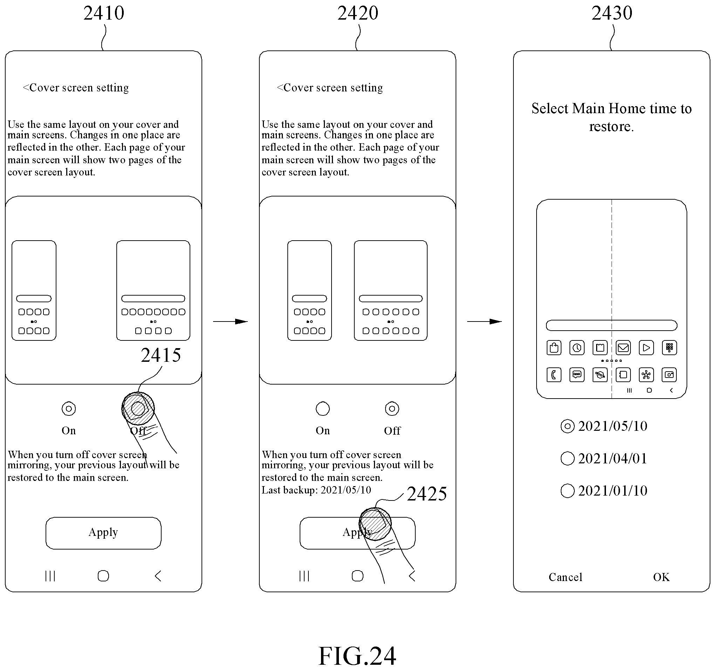

FIG. 24 is a diagram illustrating a method of setting a screen configuration of a second screen that is restored when a screen configuration mode of an electronic device is switched from a second mode to a first mode, according to an embodiment.

FIG. 24 illustrates a screen 2430 that is provided such that a user selects screen information of the second screen to be used upon restoration of the second screen when the user switches the screen configuration mode to the first mode ("Off") as shown in the screen 2420 in a situation in which the screen configuration mode is set to the second mode ("On") as shown in a screen 2410.

For example, when the user selects an "Off" button 2415 displayed on the screen 2410, the screen 2410 may be switched to the screen 2420 in which the screen configuration mode is set to the first mode corresponding to an "Off" button 2415. An "Apply" button 2425 for applying the set screen configuration mode may be displayed on the screen 2420.

When the user selects the "Apply" button 2425, an electronic device (e.g., the electronic device 101 in FIG. 1, the electronic device 200 in FIGS. 2, 3, 4A and 4B, and the electronic device 500 in FIG. 5) may provide a UI screen 2430 that allows the user to select home screen information of the second screen to be restored according to synchronization not being performed.

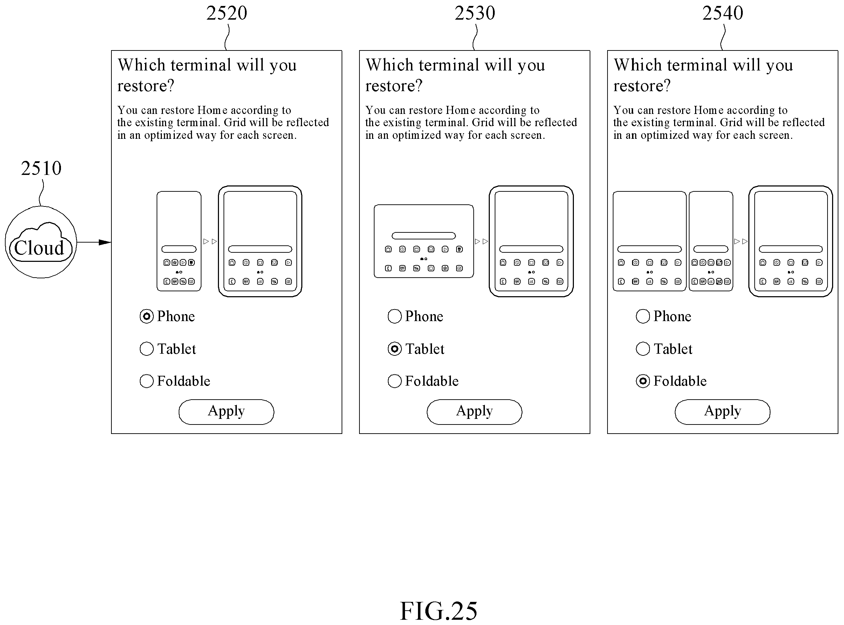

The UI screen 2430 may include multiple time entries that are usable for a screen configuration of the second screen to be restored. The time entries may include, for example, a maximum of five pieces of information ("screen information of the second screen") related to a second content included in the second screen. A time entry in the time entries may correspond to, for example, screen information of the second screen stored by the electronic device in response to a time point when the screen configuration mode is set to on or off, such as "2021/05/10," "2021/04/01," and "2021/01/10." The electronic device may store the screen information of the second screen in, for example, the electronic device, or a cloud as illustrated in FIG. 25 below, or a storage device in operative association with a user account.

When the user selects "2021/05/10" from among the time entries displayed on the UI screen 2430, the electronic device may display a preview screen of the screen information corresponding to the selected time entry. When the user selects "OK," the electronic device may restore the second screen using the screen information of the second screen stored in response to the time point "2021/05/10." The most recent screen information of the second screen before the screen configuration mode is switched to the second mode may be set as a default.

FIG. 25 is a diagram illustrating a method of setting a screen configuration of a second screen that is restored when a screen configuration mode of an electronic device is switched from a second mode to a first mode, according to another embodiment.

FIG. 25 illustrates screens 2520, 2530, and 2540 for receiving a user setting for a screen of one device to be restored among devices when an electronic device (e.g., the electronic device 101 in FIG. 1, the electronic device 200 in FIGS. 2, 3, 4A and 4B, and the electronic device 500 in FIG. 5) stores, in a cloud 2510, screen information of the second screen for each device belonging to a user account.

For example, information (screen information of the second screen) related to a second content included in the second screen may be stored in the cloud 2510 for each of devices (e.g., a phone, a tablet, and a foldable).

In this case, the electronic device may receive, via the screens 2520, 2530, and 2540, a user setting for one device to restore the second screen among the devices (e.g., a phone, a tablet, and a foldable).

For example, when "Phone" is selected as shown in the screen 2520, the electronic device may restore the second screen of the electronic device according to screen information of the second screen corresponding to a phone when "Apply" is selected. When "Tablet" is selected as shown the screen 2530, the electronic device may restore the second screen of the electronic device according to screen information of the second screen corresponding to a tablet when "Apply" is selected. In addition, when "Foldable" is selected as shown in the screen 2540, the electronic device may restore the second screen of the electronic device according to screen information of the second screen corresponding to a foldable when "Apply" is selected.

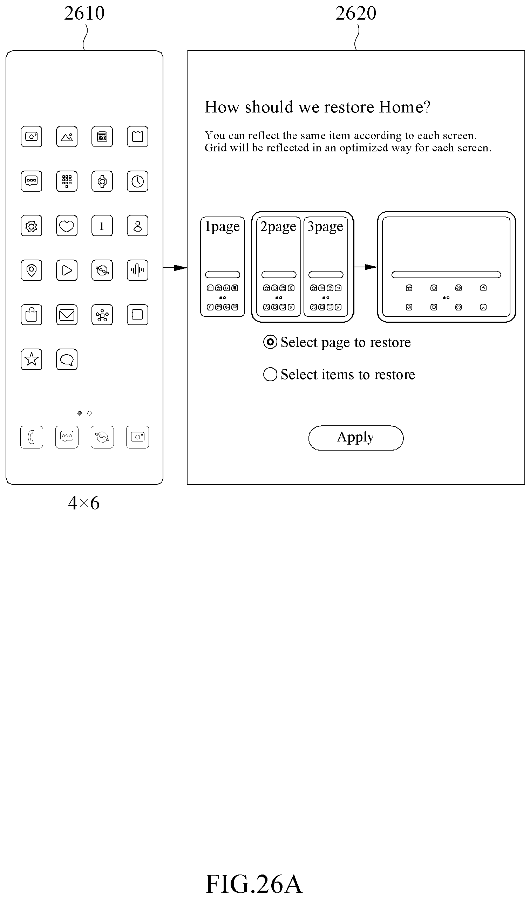

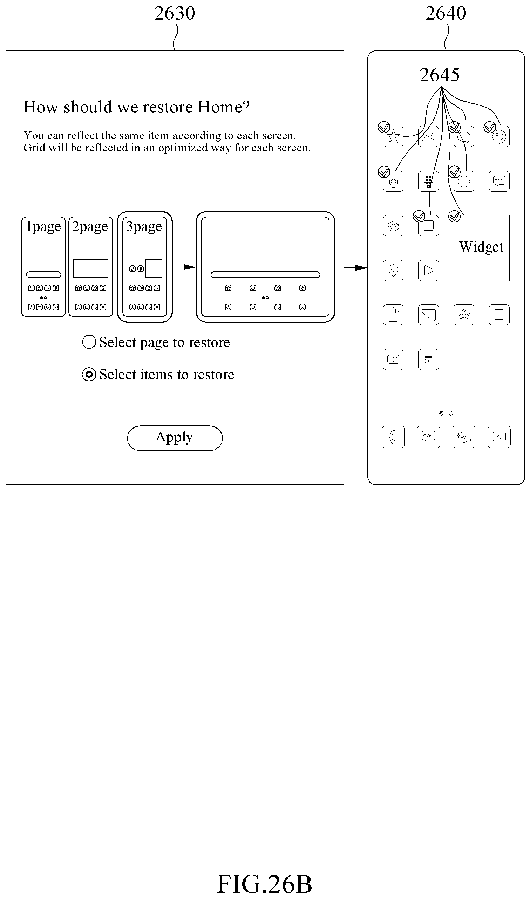

FIGS. 26A and 26B are diagrams illustrating a method of setting a screen configuration of a screen that is restored when a screen configuration mode of an electronic device is switched from a second mode to a first mode, according to another embodiment.

FIG. 26A illustrates a screen 2620 for receiving a user setting for a page to be restored in case that multiple pages are included in a screen 2610 to be restored when the screen configuration mode is switched from the second mode to the first mode.

For example, the screen 2610 to be restored may include three pages. In this case, an electronic device (e.g., the electronic device 101 in FIG. 1, the electronic device 200 in FIGS. 2, 3, 4A and 4B, and the electronic device 500 in FIG. 5) may receive a user setting for one screen to restore the screen among pages displayed on the screen 2610 as shown in the screen 2620. For example, the user may select, as pages to be restored, pages 2 and 3 among the three pages shown on the screen 2620, and may select a "Select page to restore" button. In this case, the electronic device may restore the screen such that pages 2 and 3 selected by a user are displayed.

FIG. 26B illustrates a screen 2630 for receiving a user setting for a page to be restored in case that multiple pages are included in a second screen 2630 to be restored when the screen configuration mode is switched from the second mode to the first mode.

When a page to be restored is selected as shown in the screen 2630 via FIG. 26B, the electronic device displays a screen 2640 for receiving the user's selection for a content to be displayed on the second screen to be restored among contents included in the selected page.

For example, page 3 may be selected as a page to be restored as shown in the screen 2630 by the process described above with reference to FIG. 26A, and then the user may select a "Select items to restore" button included in the screen 2630. In this case, the electronic device may provide a screen 2640 for receiving the user's selection for a second target content to be displayed on the second screen to be restored among second contents included in page 3. The screen 2640 may display the second contents included in page 3, and the user may set second target contents 2645 to be displayed on the restored second screen among the second contents. For example, when the user sets seven second target contents 2645 on the screen 2640, the electronic device may restore the second screen to include the second target contents 2645 set by the user.

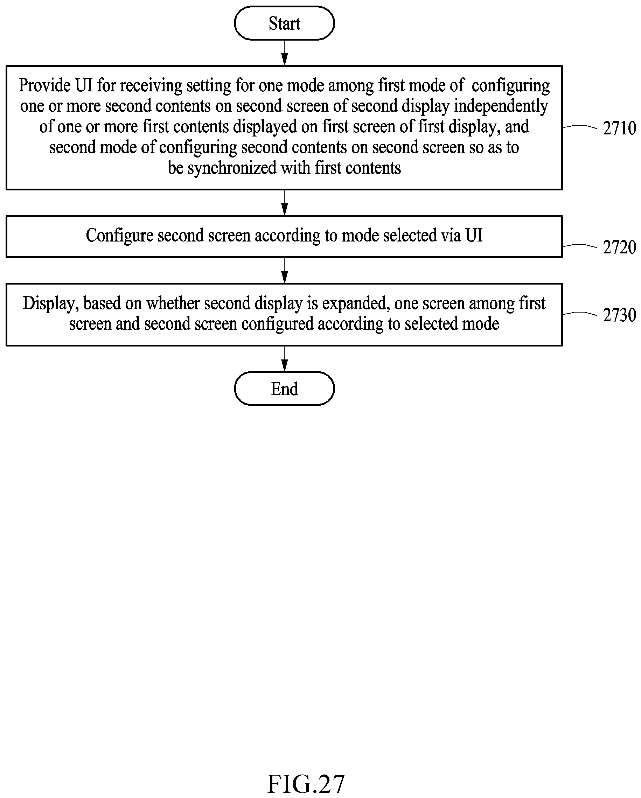

FIG. 27 is a flowchart illustrating a method of displaying a screen of an electronic device with an expandable display according to an embodiment. FIG. 27 illustrates a process in which an electronic device (e.g., the electronic device 101 in FIG. 1, the electronic device 200 in FIG. 2, and the electronic device 500 in FIG. 5) including a first display (e.g., the first display 510 in FIG. 5) and a second expandable display (e.g., the second display 520 in FIG. 5) displays a screen via operations 2710 to 2730 according to an embodiment.

In operation 2710, the electronic device may provide a UI for receiving a setting indicating one mode among a first mode of configuring one or more second contents on a second screen of the second display 520 independently of one or more first contents displayed on a first screen of the first display 510, and a second mode of configuring the second contents on the second screen in synchronization with the first contents.

In operation 2720, the electronic device may configure the second screen depending on a mode that is set via the UI provided in operation 2710. For example, when the first mode is set via the UI, the electronic device may configure the second contents on the second screen independently of the first contents. Alternatively, when the second mode is set via the UI, the electronic device may configure the second contents on at least a portion of the second screen in synchronization with the first contents. When the second mode is set, the electronic device may configure, for example, the second contents on the at least a portion of the second screen in synchronization with arrangement positions of the first contents based on aspect ratios of the first display 510 and the second display 520.

In addition, when the second mode is set via the UI, the electronic device may store information (e.g., screen information of the second screen) related to the second contents configured on the second screen independently of the first contents according to the first mode. The electronic device may store, for example, screen information of the second screen in a memory of the electronic device, in a cloud, or in operative association with a user account of a corresponding electronic device.

In operation 2730, the electronic device may display, based on whether the second display 520 is expanded, one of the first screen and the second screen configured in operation 2720 according to the mode set in operation 2710.

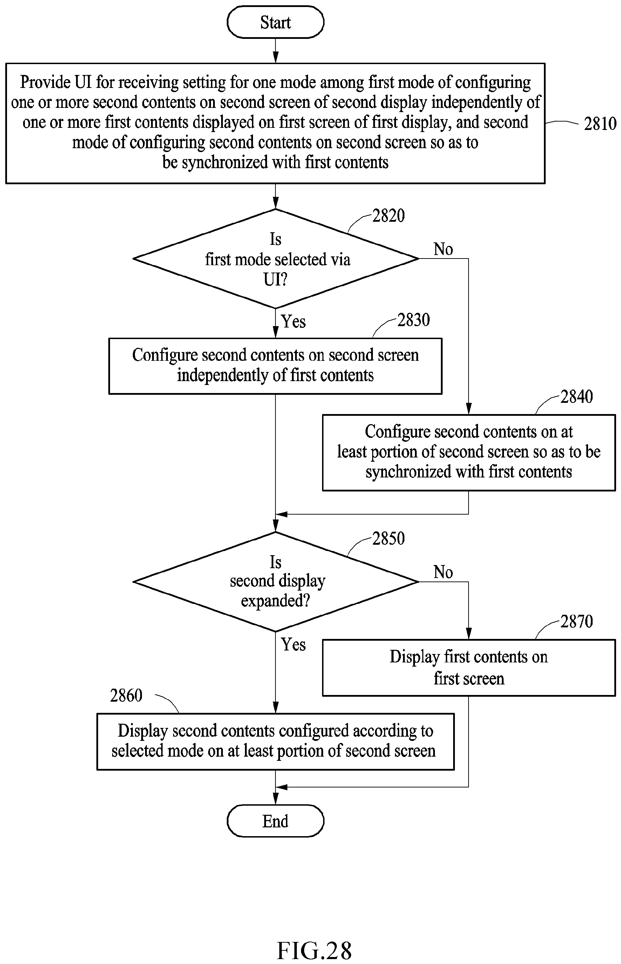

FIG. 28 is a flowchart illustrating a method of displaying a screen of an electronic device with an expandable display according to another embodiment. FIG. 28 illustrates a process in which an electronic device (e.g., the electronic device 101 in FIG. 1, the electronic device 200 in FIG. 2, and the electronic device 500 in FIG. 5) including a first display (e.g., the first display 510 of FIG. 5) and a second expandable display (e.g., the second display 520 in FIG. 5) displays a screen via operations 2810 to 2870 according to an embodiment.

In operation 2810, the electronic device may provide a UI for receiving a setting indicating one mode among a first mode of configuring one or more second contents on a second screen of the second display 520 independently of one or more first contents displayed on a first screen of the first display 510, and a second mode of configuring the second contents on the second screen in synchronization with the first contents.

In operation 2820, the electronic device may determine whether the first mode is set via the UI provided in operation 2810.

When it is determined in operation 2820 that the first mode is set, the electronic device may configure the second contents on the second screen independently of the first contents in operation 2830.

Alternatively, when it is determined in operation 2820 that the first mode is not set, that is, that the second mode is set, the electronic device may configure the second contents on at least a portion of the second screen in synchronization with the first contents in operation 2840.

In operation 2850, the electronic device may determine whether the second display 520 is expanded.

When it is determined in operation 2850 that the second display 520 is expanded, the electronic device may configure and display the second contents on the at least a portion of the second screen according to the mode set in the above-described process in operation 2860.

When it is determined in operation 2850 that the second display 520 is not expanded, the electronic device may display the first contents on the first screen in operation 2870.

## Claims

1. An electronic device comprising:
a first display;
a second display; and
a processor configured to:
provide a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured;
configure the second screen according to the mode set via the UI; and
display, based on whether the second display is activated, one screen among the first screen and the second screen configured according to the mode.

2. The electronic device of claim 1, wherein the processor is further configured to:
independently configure the second contents of the second screen and the first contents, based on the mode being set as the first mode; and
synchronously configure the first contents and the second contents based on the mode being set as the second mode.

3. The electronic device of claim 2, wherein the first screen comprises first pages, and
wherein the processor is further configured to generate, based on a number of first pages of the first screen, a second page of the second screen on which the second contents are displayed.

4. The electronic device of claim 3, wherein the processor is further configured to:
configure the second page such that one first page is arranged in a first area of the second page, and an empty page is arranged in a second area of the second page, based on the number of first pages being one;
configure the second page such that the first pages are displayed in pairs on the second page, based on the number of first pages being an even number greater than one; and
configure the second page such that a last first page of the first pages and a penultimate first page of the first pages are displayed together, based on the number of first pages being an odd number greater than one.

5. The electronic device of claim 3, wherein the processor is further configured to identify at least one of a number of pages to move on the second screen and an editing area of the second page based on a user input with respect to the second screen.

6. The electronic device of claim 5, wherein the processor is further configured to:
move the second screen in units of the first pages based on the user input being a first type of user input;
move from a first second page to a last second page of the second screen based on the user input being a second type of user input;
identify a first area of the second page as editable based on the user input being a third type of user input; and
identify a second area of the second page as editable based on the user input being a fourth type of user input.

7. The electronic device of claim 2, wherein the processor is further configured to:
independently configure the second contents of the second screen and the first contents, based on the mode being set as the first mode; and
synchronously configure the first contents and the second contents such that a number of first contents in a first hot-seat area of the first screen is equal to a number of second contents in a second hot-seat area of the second screen, based on the mode being set as the second mode.

8. The electronic device of claim 1, wherein the processor is further configured to restore a previous configuration of the second screen, independently of the first contents, based on the mode being switched from the second mode to the first mode.

9. The electronic device of claim 8, wherein the processor is further configured to:
receive a user setting for indicating whether to restore at least one page of the previous configuration or content of the previous configuration;
restore the at least one page of the previous configuration of based on the user setting indicating to restore the at least one page of the previous configuration; and
display the at least one page of the previous configuration.

10. The electronic device of claim 9, wherein the processor is further configured to:
restore the content of the previous configuration based on the user setting indicating to restore the content of the previous configuration ; and
display the content of the previous configuration.

11. The electronic device of claim 8, wherein the processor is further configured to:
receive, from an external device in which information related to the second contents included in the second screen is stored for each of a plurality of devices, a user setting indicating a target device, from among the plurality of devices, to restore the second screen to; and
restore the second screen to the target device.

12. The electronic device of claim 1, wherein the processor is further configured to store information related to the second contents configured on the second screen independently of the first contents previously configured according to the first mode, based on the mode being set as the second mode.

13. The electronic device of claim 1, wherein the processor is further configured to:
control the first display to display the first contents on the first screen, based on the second display being inactive; and
control the second display to display the second contents configured according to the mode, based on the second display being activated.

14. The electronic device of claim 1, wherein the first display and the second display have different aspect ratios,
wherein the electronic device is configured to be manipulated between a first configuration corresponding to a size of the first display and a second configuration corresponding to a second size larger than the first display, and
wherein the processor is further configured to activate the second display based on the electronic device being in the second configuration.

15. A method of controlling an electronic device including a first display and a second display, the method comprising:
providing a user interface (UI) for setting a mode among a first mode and a second mode, wherein in the first mode, first contents of a first screen corresponding to the first display and second contents of a second screen corresponding to the second display are independently configured, and in the second mode, the first contents of the first screen and the second contents of the second screen are synchronously configured;
configuring the second screen according to the mode set via the UI; and
displaying, based on whether the second display is activated, one screen among the first screen and the second screen configured according to the mode.
